# EUROPÄISCHE PATENTSCHRIFT

(11) **EP 3 452 181 B1**
(45) Veröffentlichungstag und Bekanntmachung des Hinweises auf die Patenterteilung: **12.07.2023**
(21) Anmeldenummer: 17719639.1
(22) Anmeldetag: 02.05.2017
(51) Int. Cl.: A63B 5/11, A63B 21/055

(54) **ELASTISCHES ELEMENT ZUR BEFESTIGUNG EINER SCHWUNGMATTE AN EINEM TRAMPOLINRAHMEN**
ELASTIC ELEMENT FOR FIXING A REBOUND MAT TO A TRAMPOLINE FRAME
ÉLEMENT ELASTIQUE DESTINE A FIXER UN MATELAS DE PROTECTION A UN CADRE DE TRAMPOLINE

(30) Priorität: 02.05.2016 EP 16167861
(43) Veröffentlichungstag der Anmeldung: 13.03.2019
(73) Patentinhaber: Angehrn AG Umformtechnik, 9113 Degersheim (CH)
(72) Erfinder: BISANG, Erwin, 6331 Hünenberg (CH); DURRER-KUETTEL, Ludwig, 6405 Immensee (CH); MEHR,Christian, 9533 Kirchberg (CH)
(74) Vertreter: Liebetanz, Michael
(86) Internationale Anmeldenummer: PCT/EP2017/060439
(87) Internationale Veröffentlichungsnummer: WO 2017/191144

(56) Entgegenhaltungen:
- WO-A1-2015/112956
- DE-A1-102015 006 831
- DE-U1-202015 102 576
- US-A- 2 916 746
- US-A- 3 528 656
- US-A1- 2010 319 169
- US-A1- 2011 028 287
- US-A1- 2013 316 876
- US-B1- 8 821 358

## Beschreibung

### TECHNISCHES GEBIET

Die vorliegende Erfindung betrifft ein Verfahren zur Befestigung einer Schwungmatte an einem Trampolinrahmen mit einem jeweils an jedem freien Ende vorgesehenen, den Durchmesser des elastischen Elementes verändernden Abschluss; sowie eine Verbindereinheit für die Befestigung.

### STAND DER TECHNIK

Trampoline, bspw. Minitrampoline, welche zur Gesundheitsförderung und zu Therapiezwecken genutzt werden, benötigen für die Befestigung und Spannung bzw. Montage der Schwungmatte ein geeignetes und schwingfähiges Befestigungssystem.

Es ist bekannt, die Schwungmatte mithilfe von Stahlfedern in Rahmenvorrichtungen von Minitrampolinen zu befestigen. Stahlfeder-basierte Aufhängungen haben jedoch den Nachteil, die Schwungmatte sehr straff zu spannen. Zudem verursachen die Stahlfedern bei der Benutzung des Trampolins störende Quietsch-Geräusche. Beim Schwingen oder leichten Springen auf Stahlfeder-Minitrampolinen beträgt eine Einsinktiefe der trainierenden Person in der Matte bloss ca. 20 Millimeter bis 60 Millimeter, was dem dämpfenden Bremsweg beim Aufprall entspricht. Die Aufprallkräfte werden mit der Stahlfeder-Bespannung nur geringfügig reduziert. Gelenke und die Wirbelsäule werden beim Training auf Geräten mit einer derartigen Aufhängung der Schwungmatte darum erheblichen Belastungen ausgesetzt.

DE 102 26 707 A1 beschreibt eine Bespannung, welche mit elastischen Seilschlaufen und Seilhaken statt mit Stahlfedern arbeitet. Die Gummiseil-Methode bietet eine deutlich grössere Elastizität, also längere Dämpfungswege und deshalb weichere Dämpfungseigenschaften, welche insbesondere im Physiotherapiebereich oftmals bevorzugt werden. Die Einsinktiefe bei Minitrampolinen wird also vergrössert und kann ca. 100 Millimeter bis 250 Millimeter betragen. Dies ermöglicht eine harmonischere Schwingung und ein sanfteres Abbremsen.

Aus der EP 2 540 352 wurde eine Weiterentwicklung eines Seilhakens für Trampoline bekannt. Die Weiterentwicklung schlägt vor, ein Hakenelement mit einem ersten und einem zweiten Aufnahmeabschnitt bereitzustellen, wobei die beiden Aufnahmeabschnitte durch einen Steg mit einem rückwärtigen Laschenelement getrennt voneinander sind. Das Laschenelement wird an der Matte des Trampolins befestigt. Es werden Seilschlaufen verwendet, welche aus einem Gummiseilabschnitt geformt sind, wobei Endabschnitte des Seilabschnitts in entgegengesetzte Richtungen zeigend überlappend übereinander gelegt und zu einem Ring fixiert werden. Zur Fixierung der Seilschlaufe werden in der Überlappungszone zwei Wurstklammern mit einem Abstand von 10 Millimeter bis 12 Millimeter die gegeneinander verlaufenden Endabschnitte übergreifend nebeneinander angeordnet und fest verpresst. Bei der Bespannung wird die Seilschlaufe in den ersten Aufnahmeabschnitt eingehängt, um die Rahmenvorrichtung geschlungen, zurück zum Hakenelement geführt und dort im zweiten Aufnahmeabschnitt eingehängt. Der die ersten und zweiten Aufnahmeabschnitte trennende Steg stellt sicher, dass die im ersten Aufnahmeabschnitt und im zweiten Aufnahmeabschnitt befindlichen Seilabschnitte getrennt voneinander gelagert sind und nicht aneinander reiben, womit die Verschleissfestigkeit verbessert ist. Von dieser Doppelhakenkonstruktion gehen somit vier Seilabschnitte der Seilschlaufe ab, welche die Matte mit dem Rahmen verspannen.

Von diesen vier vom Hakenelement abgehenden Seilabschnitten, haben deren drei eine gleich lange aktive Zugstrecke. Der vierte Seilabschnitt weist das oben beschriebene Wurstklammerpaket auf, was dessen aktive Zugstrecke nachteiligerweise reduziert. Mitten in der Zugstrecke entsteht durch die Klammern ein steifer Block, welcher die für die Dehnung zur Verfügung stehende Gummistrecke um ca. 20 Millimeter verkürzt. Dies kann mehr als 20 Prozent der betreffenden Teilseilstrecke betreffen.

Aufgrund der daraus folgenden Zuglängen-Differenz verhalten sich die Seilabschnitte der gespannten Seilschlaufe unterschiedlich unter Belastung. Der vierte Seilabschnitt mit den Wurstklammern wird im Vergleich zu den anderen drei Seilabschnitten wesentlich stärker beansprucht und erreicht unter Belastung aufgrund der verkürzten aktiven Gummi seil strecke schneller die maximale Dehnungslänge. Dies beeinflusst einerseits die Schwingungsqualität, weil nicht das komplette Dehnungspotential des Gummis gleichmässig zur Erzeugung der Schwingung genutzt werden kann. Anderseits führt die früher eintretende Überdehnung des vierten Seilabschnittes zu einer rascheren Beanspruchungsalterung, womit die Seilschlaufe vorzeitig ausgetauscht werden muss.

Das Dokument DE102015006831A1 offenbart einen weiteren ähnlichen Verbinder mit mehreren Aufnahmen, umfassend eine Aufnahme für ein Zugband, das mit einem Trampolin verbunden ist und zwei Aufnahmen für ein elastisches Element. Der Verbinder offenbart ein Rückhalteelement, das mit dem Verbinder eine Baueinheit bildet und daher nicht erst eingeführt werden kann, nachdem das Zugband in den Verbinder eingeführt worden ist.

Ein elastisches Element für den Einsatz zur Befestigung einer Schwungmatte an einem Trampolinrahmen ist aus der WO 2011/032173 bekannt, welches als Ersatz für eine Metallfeder zur Befestigung der Schwungmatte vorgesehen sein kann. In den Fig. 12 und 13 dieser Druckschrift verfügen die elastischen Elemente über sogenannte Bungeeterminatoren, welche als Knoten oder knollenartige Verdickungen an den Endzonen der freien Enden der elastischen Elemente einzeln oder mehrfach hintereinander gereiht vorgesehen sind. Sie dienen als Abschlüsse und Rasterelemente für das spätere Nachspannen des elastischen Elementes in unterschiedlichen Positionen und werden in seitlich vorgesehene Öffnungen eines Verbinderelementes eingehängt, welches selber über eine Lasche an der Schwungmatte befestigt, insbesondere angenäht ist.

Ein Verbinderelement nach der WO 2011/032173 umfasst zwei seitliche Öffnungen für ein elastisches Element zur Befestigung einer Schwungmatte an einem Trampolinrahmen als eine erste Aufnahme zur Herstellung einer Verbindung mit dem Rahmen des Trampolins und mindestens eine zweite Aufnahme für ein mit einer Schwungmatte befestigtes Zugband.

Die US 2 916 746 beschreibt eine Trampolinaufhängung mit einem Paar beabstandeter, paralleler, zylindrischer, elastischer Elemente, mit einer Hakenanordnung an jedem Ende des Paars von Elementen, wobei jede der Hakenanordnungen ein Paar sich quer erstreckender, beabstandeter, paralleler Drähte, einen Drahthaken und einen Drahtschaft umfasst, der einstückig an dem Haken ausgebildet ist und sich senkrecht zu den Mittelabschnitten der Drähte erstreckt und starr an diesen befestigt ist. Eine einstückige Schlaufe ist an jedem Ende jedes der Drähte ausgebildet, wobei die Schlaufen in beabstandeter, paralleler Beziehung angeordnet sind, wobei der Schaft vollständig zwischen den Elementen angeordnet ist, wobei die Schlaufen die Endabschnitte der Drähte fest und getrennt voneinander umfassen und die Hakenanordnung daran befestigen.

### DARSTELLUNG DER ERFINDUNG

Es ist eine Aufgabe der vorliegenden Erfindung, ein Verfahren anzugeben, welches die Befestigung einer Schwungmatte in einem Trampolinrahmen weiter verbessert. Diese Aufgabe wird mit den Merkmalen des Verfahrens nach Anspruch 1 gelöst.

Dabei können Verbinder eingesetzt werden, die eine einfachere und kostengünstigere Herstellung (Vernähung) der Schwungmatte ermöglichen, weil die Verbinder erst zum Zeitpunkt der Ausrüstung des Trampolins mit der vom Kunden gewünschten Spannstärke der Gummiseile mit der Matte verbunden bzw. eingehängt werden müssen. Der hier vorgestellte Typ von Verbinder ermöglicht auch den einfachen Austausch im Falle eines Defektes.

Ein elastisches Element zur Befestigung einer Schwungmatte an einem Trampolinrahmen hat ein jeweils an jedem freien Ende vorgesehenen, den Durchmesser des elastischen Elementes verändernden Abschluss. Dabei umfasst das elastische Element ein flexibles Seilelement und zwei separate Abschlüsse, die an den freien Enden im Klemmschluss mit dem flexiblen Seilelement verbunden sind, wobei der Abschluss in einem mit der Schwungmatte verbundenem Verbinder in einem Form und/oder Klemmschluss gehalten ist.

Insbesondere können die Abschlüsse C-förmig sein und ihre freien Enden umfassen zwei gegenüber liegende Klemmkörper, ggf. kann ein Abschluss auch zwei C-förmige Klemmen umfassen, die durch einen quer verlaufenden Korpus verbunden sind, so dass weniger Abschlüsse benötigt werden und sie zudem gleichzeitig die Funktion der Verbinder übernehmen können.

Dabei können die gegenüberliegenden Aussenseiten der freien Enden der Abschlüsse in Richtung auf das flexible Seilelement sich im Abstand verjüngend zulaufen.

Ein elastisches Element kann eine zusätzliche Klammer haben, deren freie Enden um die freien Enden des Abschlusses herumgebogen diese klemmend auf dem freien Ende des flexiblen Seilelementes halten.

Der Abschluss kann auch über einen über das Raumprofil der freien Enden des Abschlusses hinausragenden Flanschabschnitt verfügen, um in dem zugeordneten Verbinder verankert zu werden.

Der Abschluss kann ringförmig sein und der herausragende Flanschabschnitt durch Klemmung aus einem ringförmigen Element erzeugt werden. Dabei können zusätzlich jeweils seitliche Abschnitte der seitlich herausragenden Flanschabschnitte durch Stanzung und Falzung erzeugte Seitenwände aufweisen.

Ein Verbinder für ein elastisches Element ist mit mindestens einer ersten Aufnahme für den Abschluss und mit mindestens einer zweiten Aufnahme für ein mit einer Schwungmatte befestigtes Zugband versehen, wobei die mindestens erste Aufnahmen jeweils ein reines Durchgangsloch sind, und dass der Durchmesser des Durchgangslochs grösser ist als der Durchmesser des flexiblen Seilelements des elastischen Elementes.

Ein Verbinder zur Befestigung einer Schwungmatte an einem Trampolinrahmen hat ein elastisches Element mit einem jeweils an jedem freien Ende vorgesehenen, den Durchmesser des elastischen Elementes verändernden Abschluss, und ist mit mindestens einer ersten Aufnahme für den Abschluss und mit mindestens einer zweiten Aufnahme für ein mit einer Schwungmatte befestigtes Zugband versehen, wobei die mindestens eine erste Aufnahme jeweils ein Sackloch ist, dass der Verbinder ein Unterteil und ein Oberteil umfasst, und dass das Oberteil beim Aufsetzen auf das Unterteil das freie Ende des flexiblen Seilelements klemmend umfasst.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht eines elastischen Elementes mit einem Abschluss und einer Aufnahme für diesen;
- Fig. 2: eine perspektivische Ansicht des Abschlusses nach Fig. 1;
- Fig. 3: eine perspektivische Ansicht eines Abschlusses ähnlich zu dem nach Fig. 2;
- Fig. 4: eine perspektivische Ansicht des Abschlusses nach Fig. 1 vor dem Biegen in seine endgültige Form;
- Fig. 5: eine perspektivische Ansicht eines elastischen Elementes mit einem Abschluss;
- Fig. 6: eine perspektivische Ansicht des Abschlusses nach Fig. 5;
- Fig. 7A: eine perspektivische Ansicht eines zweiteiligen Abschlusses im offenen Zustand;
- Fig. 7B: eine perspektivische Ansicht des zweiteiligen Abschlusses nach Fig. 7A im geschlossenen Zustand ohne flexibles Seilelement;
- Fig. 7C: eine perspektivische Ansicht von zwei zweiteiligen Abschlüssen nach Fig. 7A im geschlossenen Zustand mit einem zur Schlaufe geformten flexiblen Seilelement (teilweise dargestellt);
- Fig. 8A: eine perspektivische Ansicht eines weiteren zweiteiligen Abschlusses im offenen Zustand;
- Fig. 8B: eine perspektivische Ansicht des zweiteiligen Abschlusses nach Fig. 8A im geschlossenen Zustand ohne flexibles Seilelement;
- Fig. 8C: eine perspektivische Ansicht von zwei zweiteiligen Abschlüssen nach Fig. 8A im geschlossenen Zustand mit einem zur Schlaufe geformten flexiblen Seilelement;
- Fig. 9A: eine perspektivische Ansicht eines weiteren zweiteiligen Abschlusses im offenen Zustand;
- Fig. 9B: eine perspektivische Ansicht des zweiteiligen Abschlusses nach Fig. 9A im geschlossenen Zustand ohne flexibles Seilelement;
- Fig. 9C: eine perspektivische Ansicht von zwei zweiteiligen Abschlüssen nach Fig. 9A im geschlossenen Zustand mit einem zur Schlaufe geformten flexiblen Seilelement;
- Fig. 10A: eine perspektivische Ansicht eines weiteren einteiligen Abschlusses im offenen Zustand;
- Fig. 10B: eine perspektivische Ansicht des einteiligen Abschlusses nach Fig. 10A im geschlossenen Zustand ohne flexibles Seilelement;
- Fig. 10C: eine perspektivische Ansicht von zwei einteiligen Abschlüssen nach Fig. 10A im geschlossenen Zustand mit einem zur Schlaufe geformten flexiblen Seilelement;
- Fig. 11A: zwei Vorderansichten eines weiteren Abschlusses einmal mit Klemminnenkörpern;
- Fig. 11B: eine Explosionsansicht und eine perspektivische Ansicht des Abschlusses nach Fig. 11A ohne flexibles Seilelement;
- Fig. 11C: zwei perspektivische Ansichten des Abschlusses nach Fig. 11A im teilweise vorbereiteten bzw. geschlossenen Zustand an und mit einem flexiblen Seilelement;
- Fig. 12A: zwei Vorderansichten eines weiteren Abschlusses;
- Fig. 12B: eine Explosionsansicht und eine perspektivische Ansicht des Abschlusses nach Fig. 12A im offenen Zustand ohne flexibles Seilelement;
- Fig. 12C: eine perspektivische Ansicht des Abschlusses nach Fig. 12A im geschlossenen Zustand an und mit einem flexiblen Seilelement;
- Fig. 13A: eine Explosionsansicht und zwei Vorderansichten eines weiteren Abschlusses;
- Fig. 13B: eine Explosionsansicht und eine perspektivische Ansicht des Abschlusses nach Fig. 13A im offenen Zustand ohne flexibles Seilelement;
- Fig. 13C: eine Explosionsansicht und eine perspektivische Ansicht des Abschlusses nach Fig. 13A in der Vorbereitung des geschlossenes Zustandes und im geschlossenen Zustand an und mit einem flexiblen Seilelement;
- Fig. 14A: eine Vorderansicht eines weiteren Abschlusses im offenen Zustand;
- Fig. 14B: eine perspektivische Ansicht des Abschlusses nach Fig. 14A im offenen Zustand ohne flexibles Seilelement;
- Fig. 14C: eine perspektivische Ansicht des Abschlusses nach Fig. 14A im geschlossenen Zustand an und mit einem flexiblen Seilelement;
- Fig. 15A: eine Vorderansicht eines weiteren Abschlusses im offenen Zustand;
- Fig. 15B: eine perspektivische Ansicht des Abschlusses nach Fig. 15A im offenen Zustand ohne flexibles Seilelement;
- Fig. 15C: eine perspektivische Ansicht des Abschlusses nach Fig. 15A im geschlossenen Zustand an und mit einem flexiblen Seilelement;
- Fig. 16A: eine Vorderansicht eines weiteren Abschlusses im offenen Zustand;
- Fig. 16B: eine perspektivische Ansicht des Abschlusses nach Fig. 16A im offenen Zustand ohne flexibles Seilelement und eine perspektivische Ansicht des Abschlusses nach Fig. 16A auf dem flexiblen Seilelement geklemmt;
- Fig. 16C: eine perspektivische Ansicht des Abschlusses nach Fig. 16A im geschlossenen Zustand an und mit einem flexiblen Seilelement;
- Fig. 17A: eine Vorderansicht eines weiteren Abschlusses im offenen Zustand;
- Fig. 17B: eine perspektivische Ansicht des Abschlusses nach Fig. 17A im offenen Zustand ohne flexibles Seilelement und eine perspektivische Ansicht des Abschlusses nach Fig. 17A auf dem flexiblen Seilelement geklemmt;
- Fig. 17C: eine perspektivische Ansicht des Abschlusses nach Fig. 17A im geschlossenen Zustand an und mit einem flexiblen Seilelement;
- Fig. 18A: eine Draufsicht auf eine Verbindungseinheit mit zwei elastischen Elementen mit jeweils einem weiteren Abschluss für den Einsatz in einem Verfahren gemäss einem Ausführungsbeispiel der Erfindung, eingesetzt in zwei Verbindungselemente;
- Fig. 18B: eine perspektivische Ansicht der Verbindungseinheit nach Fig. 18A;
- Fig. 19A: eine Seitenansicht auf die Verbindungseinheit nach Fig. 18A mit zu einer Schlaufe geformten elastischen Elementen und zwei in die Verbindungseinheiten eingehängten Zugbändern;
- Fig. 19B: eine perspektivische Ansicht der Verbindungseinheit nach Fig. 19A;
- Fig. 20A: eine Draufsicht auf eine Verbindungseinheit mit drei elastischen Elementen mit jeweils einem weiteren Abschluss für den Einsatz in einem Verfahren gemäss einem Ausführungsbeispiel der Erfindung, eingesetzt in zwei Verbindungselemente;
- Fig. 20B: eine perspektivische Ansicht der Verbindungseinheit nach Fig. 20A;
- Fig. 21A: eine Seitenansicht auf die Verbindungseinheit nach Fig. 18A mit zwei elastischen Elementen und zwei in die Verbindungseinheiten eingehängten Zugbändern;
- Fig. 21B: eine perspektivische Ansicht der Verbindungseinheit nach Fig. 18A;
- Fig. 22A: eine perspektivische Ansicht einer Verbindungseinheit nach einem Beispiel nicht gemäss einem Ausführungsbeispiel der Erfindung mit einem Verbindungsband;
- Fig. 22B: eine Seitenansicht auf eine Verbindungseinheit mit einem elastischen Element mit zwei weiteren Abschlüssen nach einem Beispiel nicht gemäss einem Ausführungsbeispiel der Erfindung, eingesetzt in zwei Verbindungseinheiten;
- Fig. 22C: eine Draufsicht auf die Verbindungseinheit nach Fig. 22A;
- Fig. 23A: eine perspektivische Ansicht eines Verbinders ähnlich zu dem aus Fig. 19;
- Fig. 23B: eine perspektivische Ansicht einer Verbindungseinheit mit über den Verbinder aus Fig. 23A verbundenem Zugband;
- Fig. 24A: eine perspektivische Ansicht eines Verbinders ähnlich zu dem aus Fig. 20;
- Fig. 24B: eine perspektivische Ansicht einer Verbindungseinheit mit über den Verbinder aus Fig. 24A verbundenem Zugband;
- Fig. 25A: eine perspektivische Ansicht eines geschlossenen, zweiteiligen Verbinders mit einem eingesetzten flexiblen Seilelement;
- Fig. 25B: eine perspektivische Explosionsansicht des Verbinders aus Fig. 25A;
- Fig. 26A: eine perspektivische Ansicht eines geschlossenen, zweiteiligen Verbinders mit einem eingesetzten flexiblen Seilelement;
- Fig. 26B: eine perspektivische Explosionsansicht des Verbinders aus Fig. 26A;
- Fig. 27A: eine Vorderansicht auf einen weiteren Verbinder zum Einsatz in einem Verfahren gemäss einem Ausführungsbeispiel;
- Fig. 27B: eine perspektivische Ansicht des Verbinders aus Fig. 27A;
- Fig. 27C: eine Vorderansicht auf den Verbinder nach Fig. 27A mit zwei flexiblen Seilelementen, teilweise mit Abschlüssen;
- Fig. 27D: eine perspektivische Ansicht des Gegenstandes aus Fig. 27C;
- Fig. 28A: eine Vorderansicht auf einen weiteren Verbinder zum Einsatz in einem Verfahren gemäss einem Ausführungsbeispiel;
- Fig. 28B: eine perspektivische Ansicht des Verbinders aus Fig. 28A;
- Fig. 28C: eine Vorderansicht auf den Verbinder nach Fig. 28A mit zwei flexiblen Seilelementen, teilweise mit Abschlüssen;
- Fig. 28D: eine perspektivische Ansicht des Gegenstandes aus Fig. 28C;
- Fig. 28E: eine Draufsicht auf den Verbinder nach Fig. 28A;
- Fig. 28F: eine Draufsicht auf den Gegenstand aus Fig. 28D;
- Fig. 29A: eine Vorderansicht auf einen weiteren Verbinder zum Einsatz in einem Verfahren gemäss einem Ausführungsbeispiel;
- Fig. 29B: eine perspektivische Ansicht des Verbinders aus Fig. 29A;
- Fig. 29C: eine Vorderansicht auf den Verbinder nach Fig. 29A mit drei flexiblen Seilelementen, teilweise mit Abschlüssen;
- Fig. 29D: eine perspektivische Ansicht des Gegenstandes aus Fig. 29C;
- Fig. 29E: eine Draufsicht auf den Verbinder nach Fig. 29A;
- Fig. 29F: eine Draufsicht auf den Gegenstand aus Fig. 29D;
- Fig. 30A: eine Vorderansicht auf einen weiteren Verbinder zum Einsatz in einem Verfahren gemäss einem Ausführungsbeispiel mit eingelegten Zugband und Bandverbinder;
- Fig. 30B: eine geschnittene Seitenansicht des Verbinders mit Zugband und Bandverbinder aus Fig. 30A;
- Fig. 30C: eine teilweise geschnittene Draufsicht auf den Verbinder mit Zugband und Bandverbinder aus Fig. 30A;
- Fig. 30D: eine perspektivische Ansicht des Gegenstandes aus Fig. 30A;
- Fig. 31A: eine Vorderansicht auf einen weiteren Verbinder zum Einsatz in einem Verfahren gemäss einem Ausführungsbeispiel mit eingelegten Zugband und Bandverbinder;
- Fig. 31B: eine geschnittene Seitenansicht des Verbinders mit Zugband und Bandverbinder aus Fig. 31A;
- Fig. 31C: eine teilweise geschnittene Draufsicht auf den Verbinder mit Zugband und Bandverbinder aus Fig. 31A;
- Fig. 31D: eine perspektivische Ansicht des Gegenstandes aus Fig. 31A;
- Fig. 31E: eine perspektivische Ansicht des in Fig. 31D gezeigten Bandes;
- Fig. 32A: eine Vorderansicht auf einen weiteren Verbinder zum Einsatz in einem Verfahren gemäss einem Ausführungsbeispiel mit eingelegten Zugband und Bandverbinder;
- Fig. 32B: eine geschnittene Seitenansicht des Verbinders mit Zugband und Bandverbinder aus Fig. 32A;
- Fig. 32C: eine teilweise geschnittene Draufsicht auf den Verbinder mit Zugband und Bandverbinder aus Fig. 32A;
- Fig. 32D: eine perspektivische Ansicht des Gegenstandes aus Fig. 32A;
- Fig. 33A: eine Vorderansicht auf einen weiteren Verbinder zum Einsatz in einem Verfahren gemäss einem Ausführungsbeispiel mit eingelegten Zugband und Bandverbinder;
- Fig. 33B: eine geschnittene Seitenansicht des Verbinders mit Zugband und Bandverbinder aus Fig. 33A;
- Fig. 33C: eine teilweise geschnittene Draufsicht auf den Verbinder mit Zugband und Bandverbinder aus Fig. 33A;
- Fig. 33D: eine perspektivische Ansicht des Gegenstandes aus Fig. 33A sowie eine Teilansicht des Zugbandes und des Bandverbinders;
- Fig. 33E: eine Seitenansicht auf den Bandverbinder aus Fig. 33A;
- Fig. 33F: eine perspektivische Ansicht des Bandverbinders aus Fig. 33E;
- Fig. 33G: eine perspektivische Ansicht des Bandverbinders aus Fig. 33E mit eingelegtem Band;
- Fig. 33H: eine gegenüber Fig. 33G andere perspektivische Ansicht des Bandverbinders mit eingelegtem Band;
- Fig. 34A: eine Vorderansicht auf das Zugband nach einem der Figs. 30 bis 33;
- Fig. 34B: eine Draufsicht auf das Zugband aus Fig. 34A;
- Fig. 34C: eine perspektivische Ansicht des Zugbandes aus Fig. 34A;
- Fig. 35A: eine Vorderansicht auf ein weiteres Zugband;
- Fig. 35B: eine Draufsicht auf das Zugband nach Fig. 35A;
- Fig. 35C: eine perspektivische Ansicht des Zugbandes nach Fig. 35A;
- Fig. 36A: eine Vorderansicht auf einen weiteren Verbinder nach einem Beispiel nicht gemäss einem Ausführungsbeispiel mit eingelegtem Zugband;
- Fig. 36B: eine geschnittene Seitenansicht des Verbinders mit Zugband aus Fig. 36A;
- Fig. 36C: eine perspektivische Ansicht des Gegenstandes aus Fig. 36A;
- Fig. 37A: eine Vorderansicht auf einen weiteren Verbinder zum Einsatz in einem Verfahren gemäss einem Ausführungsbeispiel mit eingelegtem Zugband;
- Fig. 37B: eine Seitenansicht des Verbinders mit Zugband aus Fig. 37A;
- Fig. 37C: eine perspektivische Ansicht des Gegenstandes aus Fig. 37A;
- Fig. 38A: eine Vorderansicht auf einen weiteren Bandverbinder nach einem Beispiel nicht gemäss einem Ausführungsbeispiel der Erfindung mit eingelegtem Zugband;
- Fig. 38B: eine Draufsicht auf den Gegenstand aus Fig. 38A;
- Fig. 38C: eine perspektivische Ansicht des Gegenstandes aus Fig. 38A;
- Fig. 38D: eine weitere perspektivische Ansicht des Gegenstandes aus Fig. 38A;
- Fig. 39A: eine Vorderansicht auf den Bandverbinder nach einem Beispiel nicht gemäss einem Ausführungsbeispiel der Erfindung mit eingelegtem Zugband nach Fig. 38A mit einem weiteren Verbinder;
- Fig. 39B: eine Draufsicht auf den Gegenstand aus Fig. 39A;
- Fig. 39C: eine perspektivische Ansicht des Gegenstandes aus Fig. 39A;
- Fig. 39D: eine weitere perspektivische Ansicht des Gegenstandes aus Fig. 39A;
- Fig. 40A: eine Vorderansicht auf einen Bandverbinder nach einem Beispiel nicht gemäss einem Ausführungsbeispiel der Erfindung mit eingelegtem Zugband mit einem weiteren Verbinder;
- Fig. 40B: eine Draufsicht auf den Gegenstand aus Fig. 40A;
- Fig. 40C: eine perspektivische Ansicht des Gegenstandes aus Fig. 40A;
- Fig. 40D: eine weitere perspektivische Ansicht des Gegenstandes aus Fig. 40A;
- Fig. 41A: eine Vorderansicht auf einen weiteren Verbinder nach einem Beispiel nicht gemäss einem Ausführungsbeispiel der Erfindung mit eingelegtem Zugband;
- Fig. 41B: eine Draufsicht auf den Gegenstand aus Fig. 41A;
- Fig. 41C: eine perspektivische Ansicht des Gegenstandes aus Fig. 41A;
- Fig. 41D: eine weitere perspektivische Ansicht des Gegenstandes aus Fig. 41A;
- Fig. 42A: eine Vorderansicht auf einen Bandverbinder nach einem Beispiel nicht gemäss einem Ausführungsbeispiel der Erfindung mit eingelegtem Zugband mit einem weiteren Verbinder;
- Fig. 42B: eine Draufsicht auf den Gegenstand aus Fig. 42A;
- Fig. 42C: eine perspektivische Ansicht des Gegenstandes aus Fig. 42A;
- Fig. 42D: eine weitere perspektivische Ansicht des Gegenstandes aus Fig. 42A;
- Fig. 43A: eine Vorderansicht auf einen Bandverbinder nach einem Beispiel nicht gemäss einem Ausführungsbeispiel der Erfindung mit eingelegtem Zugband mit einem weiteren Verbinder;
- Fig. 43B: eine Draufsicht auf den Gegenstand aus Fig. 43A;
- Fig. 43C: eine perspektivische Ansicht des Gegenstandes aus Fig. 43A;
- Fig. 43D: eine weitere perspektivische Ansicht des Gegenstandes aus Fig. 43A;
- Fig. 43E: eine geschnittene Seitenansicht des Gegenstandes aus Fig. 43A;
- Fig. 44A: eine perspektivische Ansicht auf einen teilweise dargestellten weiteren Verbinder zum Einsatz in einem Verfahren gemäss einem Ausführungsbeispiel;
- Fig. 44B: eine Seitenansicht des Verbinders nach Fig. 44A;
- Fig. 44C: eine geschnittene Seitenansicht des Gegenstandes aus Fig. 44A;
- Fig. 44D: eine Draufsicht auf den Gegenstand aus Fig. 44A;
- Fig. 45: eine perspektivischen Ansicht des Verbinders aus Fig. 44A;
- Fig. 46: eine perspektivische Ansicht einer Klammer nach Fig. 44A;
- Fig. 47A: eine perspektivische Ansicht auf einen teilweise dargestellten weiteren Verbinder gemäss einem Ausführungsbeispiel;
- Fig. 47B: eine Seitenansicht des Verbinders nach Fig. 47A;
- Fig. 47C: eine geschnittene Seitenansicht des Gegenstandes aus Fig. 47A;
- Fig. 47D: eine Draufsicht auf den Gegenstand aus Fig. 47A;
- Fig. 48: eine perspektivischen Ansicht des Verbinders aus Fig. 47A;
- Fig. 49: eine perspektivische Ansicht einer Klammer nach Fig. 47A;
- Fig. 50A: eine Draufsicht auf eine Verbindungseinheit mit zwei elastischen Elementen mit jeweils einem in die Verbindungseinheit integrierten Abschluss nach einem Beispiel nicht gemäss einem Ausführungsbeispiel der Erfindung,
- Fig. 50B: eine perspektivische Ansicht der Verbindungseinheit nach Fig. 50A;
- Fig. 50C: eine Teil-Seitenansicht auf einen Ausschnitt der Verbindungseinheit nach Fig. 50A;
- Fig. 51: eine perspektivische Ansicht des integrierten Abschlusses der Verbindungseinheit nach Fig. 50A;
- Fig. 52A: eine Seitenansicht auf teilweise dargestellte Verbindungseinheiten nach Fig. 50A mit einem eingelegten Band;
- Fig. 52B: eine geschnittene Seitenansicht des Gegenstandes aus Fig. 52A;
- Fig. 52C: eine perspektivische Ansicht des Gegenstandes aus Fig. 52A;
- Fig. 53A: eine perspektivische Ansicht auf einen teilweise dargestellten weiteren Verbinder zum Einsatz in einem Verfahren gemäss einem Ausführungsbeispiel;
- Fig. 53B: eine perspektivische Explosionsansicht von drei Teilen des Gegenstandes nach Fig. 53A;
- Fig. 54A: eine Seitenansicht auf eine teilweise dargestellte Verbindungseinheit nach Fig. 53A mit einem eingelegten Band;
- Fug. 54B: eine geschnittene Seitenansicht des Gegenstandes aus Fig. 54A;
- Fig. 54C: eine Draufsicht auf den Gegenstand aus Fig. 54A
- Fig. 55A: eine perspektivische Ansicht auf eine kurze Verbindungseinheit mit zwei zu einer Schlaufe geformten elastischen Elementen und einem in die Verbindungseinheit eingehängten Zugband ähnlich zu dem nach Fig. 35;
- Fig. 55B: eine perspektivische Ansicht von oben auf das Unterteil der Verbindungseinheit nach Fig. 55A mit elastischen Elementen und Zugband;
- Fig. 56A: eine perspektivische Ansicht eines weiteren Abschlusses im offenen Zustand auf einem flexiblen Seilelement;
- Fig. 56B: eine perspektivische Ansicht des Abschlusses nach Fig. 56A im geschlossenen Zustand an und mit einem flexiblen Seilelement;
- Fig. 57: eine perspektivische Ansicht auf ein Unterteil einer längeren Verbindungseinheit als die aus Fig. 55B mit Öffnungen zum Einlegen von Abschlüssen von Seilelementen;
- Fig. 58: eine perspektivische Ansicht auf eine weitere Verbindungseinheit mit einem zu einer Schlaufe geformten elastischen Element und einem in die Verbindungseinheit eingehängten Zugband ähnlich zu dem nach Fig. 35;
- Fig. 59A: eine perspektivische Ansicht auf eine weitere Verbindungseinheit nach einem Beispiel nicht gemäss einem Ausführungsbeispiel der Erfindung für ein oder zwei zu einer geschlossen Schlaufe geformten elastischen Elementen mit einem eingelegten Zugband ähnlich zu dem nach Fig. 34;
- Fig. 59B: eine perspektivische Ansicht auf das Zugband nach Fig, 59A mit einem Rückhalte stab;
- Fig. 60A: eine perspektivische Ansicht eines zweiteiligen Abschlusses;
- Fig. 60B: eine perspektivische Ansicht eines der beiden identischen Abschlussteile nach Fig. 60A;
- Fig. 61A: eine perspektivische Ansicht eines zweiteiligen Abschlusses;
- Fig. 61B: eine perspektivische Ansicht des Abschlussteiles nach Fig. 61A mit Klemmhaken;
- Fig. 62A: eine perspektivische Ansicht eines weiteren Abschlusses im geschlossenen Zustand;
- Fig. 62B: eine perspektivische Ansicht des Abschlusses nach Fig. 62A im geschlossenen Zustand an und mit einem flexiblen Seilelement;
- Fig. 63A: eine perspektivische Ansicht eines weiteren Abschlusses im geschlossenen Zustand mit gegenüber der Ausführung Fig. 62A/B seitlich überstehenden Bereichen;
- Fig. 63B: eine perspektivische Ansicht des Abschlusses nach Fig. 63A im geschlossenen Zustand an und mit einem flexiblen Seilelement;
- Fig. 64A: eine perspektivische Ansicht des Abschlusses nach Fig. 63A im offenen Zustand;
- Fig. 64B: eine perspektivische Ansicht des Abschlusses nach Fig. 64A im offenen Zustand an und mit einem flexiblen Seilelement;
- Fig. 65A: eine perspektivische Ansicht eines weiteren Abschlusses ähnlich zu dem Abschluss nach Fig. 62A/B mit unterbrochenem Flansch im geschlossenen Zustand;
- Fig. 65B: eine perspektivische Ansicht des Abschlusses nach Fig. 65A im geschlossenen Zustand an und mit einem flexiblen Seilelement;
- Fig. 66A: eine perspektivische Ansicht eines weiteren Abschlusses ähnlich zu dem Abschluss nach Fig. 63A/B mit unterbrochenem Flansch im geschlossenen Zustand und mit gegenüber der Ausführung nach Fig. 65A/B seitlich überstehenden Bereichen;
- Fig. 66B: eine perspektivische Ansicht des Abschlusses nach Fig. 66A im geschlossenen Zustand an und mit einem flexiblen Seilelement;
- Fig. 67A: eine perspektivische Ansicht des Abschlusses nach Fig. 66A im offenen Zustand;
- Fig. 67B: eine perspektivische Ansicht des Abschlusses nach Fig. 67A im offenen Zustand an und mit einem flexiblen Seilelement;
- Fig. 68A: eine perspektivische Ansicht eines weiteren zweiteiligen Abschlusses mit einem zusätzlichen fixierenden Metallring;
- Fig. 68B: eine perspektivische Ansicht des Unterteils des Abschlusses nach Fig. 68A mit dem Metallring;
- Fig. 69A: eine perspektivische Ansicht auf ein Unterteil einer weiteren Verbindungseinheit mit einem zu einer Schlaufe geformten elastischen Element und einem in die Verbindungseinheit seitlich eingeführten Abschluss des elastischen Elementes mit Bügelverschluss;
- Fig. 69B: eine perspektivische Ansicht schräg von hinten unten auf die Verbindungseinheit nach Fig. 69A ohne eingelegten Abschluss
- Fig. 70A: eine perspektivische Ansicht eines weiteren zweiteiligen Abschlusses aus zwei Metallteilen;
- Fig. 70B: eine perspektivische Ansicht eines weiteren zweiteiligen Abschlusses aus einem Metallteil und einem zentralen Kunststoffteil; und
- Fig. 70C: eine perspektivische Ansicht eines weiteren zweiteiligen Abschlusses aus einem Metallteil und einem zentralen Kunststoffteil mit einem Flansch.

### BESCHREIBUNG BEVORZUGTER AUSFÜHRUNGSFORMEN

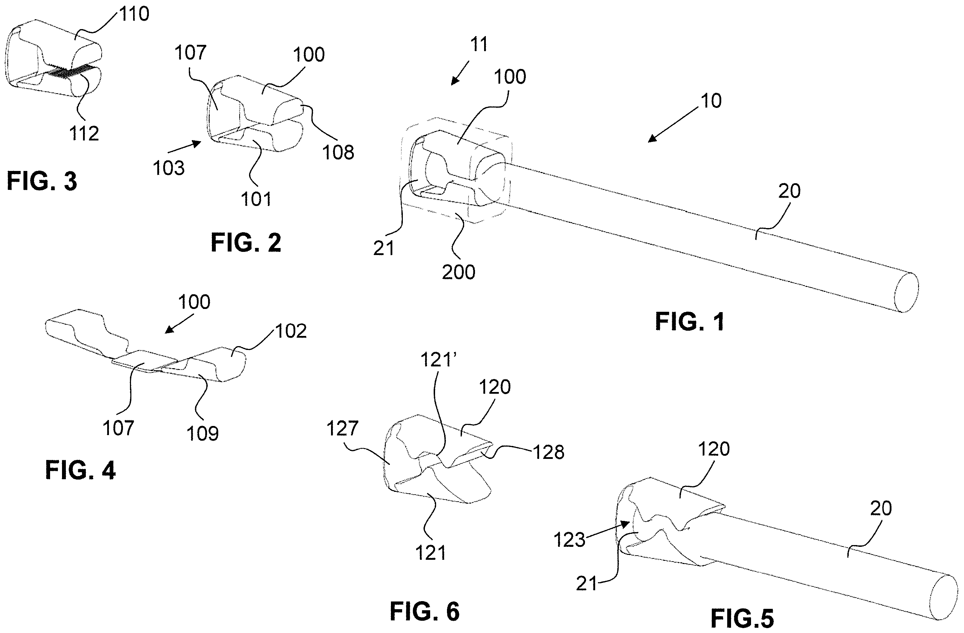

Anhand der Figuren werden nun bevorzugte Ausführungsformen von Elementen für den Einsatz in einem Verfahren gemäss der vorliegenden Erfindung beschrieben. Die Fig. 1 zeigt eine perspektivische Ansicht eines elastischen Elementes 10, bestehend aus einem flexiblen Seilelement 20 mit zwei freien Enden 21, von denen in der Fig. 1 nur das eine freie Ende 21 dargestellt ist, und mit einem Abschluss 100. Das elastische Element 10 ist dabei in einer durch gestrichelt liniert dargestellten Verbinder 200 eingelegt, von dem verschiedene Ausführungsformen als Verbindungselemente später beschrieben werden.

Das flexible Seilelement 20 kann ein Gummiband sein, ein elastisches Seil, ein- oder mehradriger Elastomer-Strang oder ein aus mehreren Filamenten mit einem geflochtenen Mantel bestehendes Seil mit geflochtener oder schlauchartiger Ummantelung. Es weist insbesondere eine entsprechende Flexibilität bei Zugbelastung auf und ist fähig, sich in Längsrichtung um mindestens 50 Prozent, insbesondere um 50 bis 150 Prozent zu dehnen. Für Anwendungen mit höherer gewünschter Elastizitätskonstante kann die Eigenschaft des Seiles auch steifer sein. Ein solches Seil ist beispielsweise vorgesehen bei der Befestigung einer Sprungmatte an einem Trampolinrahmen, wie es aus WO 2011/032173 bekannt ist.

Die Fig. 2 zeigt den Abschluss 100 ohne eingelegtes flexibles Seilelement 20. Die Fig. 4 zeigt den Abschluss 100 beispielsweise als Kunststoff-Spritzgussteil, bevor es in die geschlossene Form gebogen wird, mit der es das elastische Band 10 klemmt. Der Abschluss 100 verfügt über eine mittige Rückwand 107 mit einem auf beiden Seiten - je nach Materialwahl - jeweils durch Biegung oder in Art eines Filmscharniers vorgesehenen Übergangs in den Klemmbereich 101, bei dem sich im geklemmten Zustand zwei innenliegende Klemmflächen 102 in vorgegebener Distanz gegenüberliegen. Mit dem Bezugszeichen 103 ist der freie Raum hinter dem Klemmkörper 101 vor der Rückwand 107 bezeichnet, vor dem dann das freie Ende 21 des Seils 20 oder elastischen Elementes zu liegen kommt. In der Zone 103 kann sich das freie Ende 21 des im Klemmbereich 101 zusammengepressten und verformten Seils 20 wieder in seine ursprüngliche Dimension ausdehnen.

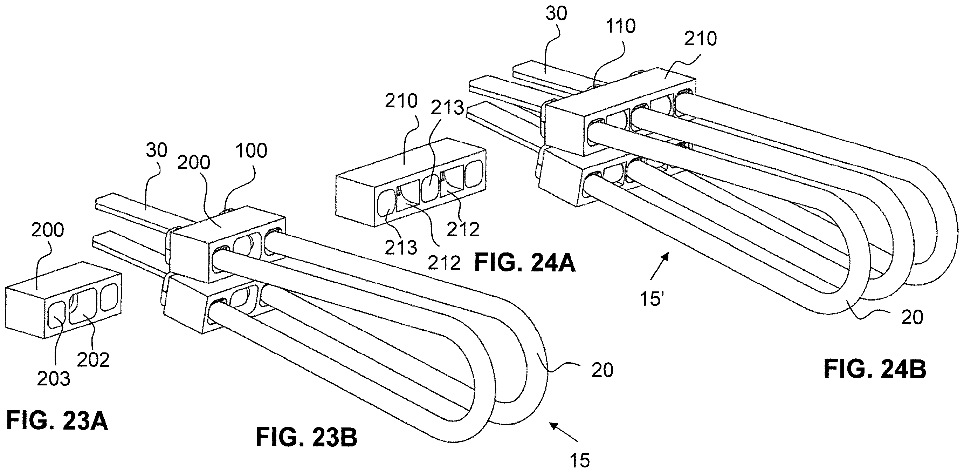

Die Fig. 3 zeigt ein weiteres Ausführungsbeispiel eines Abschlusses 110, der ähnlich zum Abschluss 100 ausgestaltet ist, mit dem Unterschied, dass die Klemmfläche 102 als gezahnte Klemmfläche 112 ausgestaltet ist, um das flexible Seilelement 20 zu halten. Es ist bei den Ausführungsbeispielen nach den Figs. 1 bis 4 zu erkennen, dass die Höhe der Rückwand 107 mit dem umknickenden Filmscharnieren höher ist als die Vorderseite 108 des Abschlusses 100 oder 110, sodass die aussenliegenden Seiten 109 verjüngend auf das flexible Seilelement 20 aufeinander zu laufen. Mit einer komplementär ausgestalteten Öffnung 203 (siehe u.a. Fig. 23A) kann dann die Klemmung des Abschlusses 110 auf dem flexiblen Seilelement 20 verbessert werden und der Sitz des elastischen Element 10 in der Aufnahme 200.

Die Fig. 5 zeigt ein weiteres Ausführungsbeispiel eines elastischen Elementes 10 mit einem Abschluss 120, bei dem auch wieder das flexible Seilelement 20 mit seinem freien Ende 21 in den Aufnahmeraum 123 hineinragt. Im Unterschied zu den vorgenannten Ausführungsbeispielen verfügt hier der Klemmkörper gemäss der Fig. 6 über eine querliegende Rippe 121, der gegenüber eine komplementäre Klemmnut 121' angeordnet ist. Hier laufen die Vorderseiten 128 auf die Innenseite des Abschlusses 120 zu, wobei sich aber ebenfalls das verjüngende Verhalten der Aussenseiten ergibt.

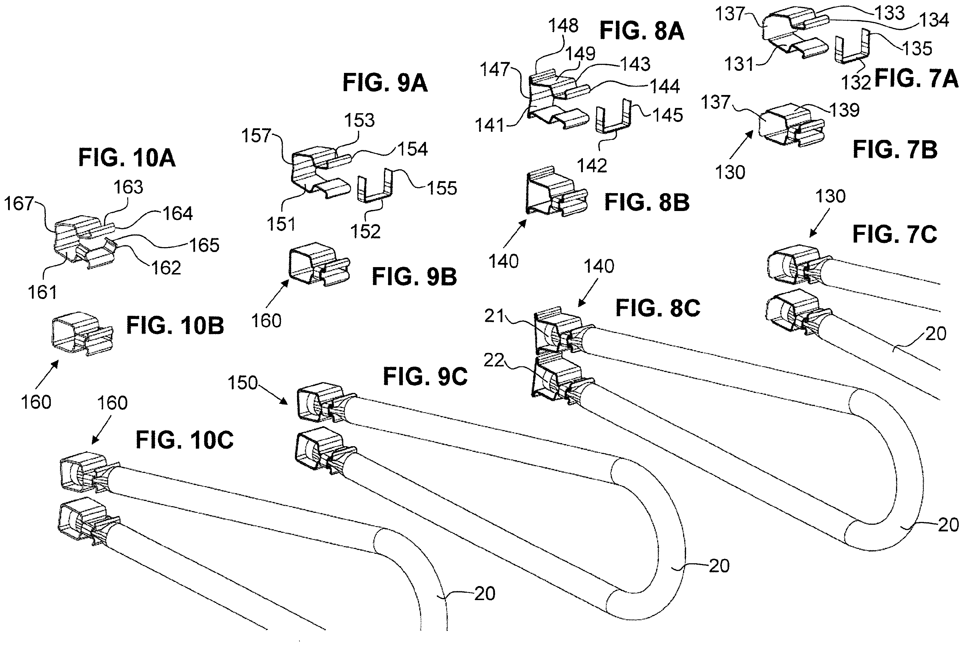

Die Fig. 7A zeigt eine perspektivische Ansicht eines zweiteiligen Abschlusses 130 gemäss einem Ausführungsbeispiel der Erfindung im offenen Zustand. Es handelt sich hier um gestanzte und vorgeformte Teile aus Metallband. Die Fig. 7B zeigt eine perspektivische Ansicht des zweiteiligen Abschlusses 130 nach Figur 7A im geschlossenen Zustand ohne eingelegtes flexibles Seilelement 20. Die zu diesem Ausführungsbeispiel gehörende Fig. 7C schliesslich zeigt eine perspektivische Ansicht von zwei zweiteiligen Abschlüssen 130 nach Fig. 7A im geschlossenen Zustand mit einem zur Schlaufe geformten flexiblen Seilelement 20 (nur teilweise dargestellt). Somit zeigt die Fig. 7C teilweise ein vollständiges elastisches Element 10.

Der Abschluss 130 besteht aus einer Klemme 131 und einer U-förmigen Sicherungs-Klammer 132. Die Klemme 131 ist ähnlich wie die Abschlüsse 100 oder 120 mit einer Rückwand 137 versehen, von der ausgehend sich im Wesentlichen im geschlossenen Zustand parallel erstreckende aussenliegende Seite 139 ergeben. Von diesen erstreckt sich bis zu den freien Enden der Klemme 131 nach innen zum einzulegenden Band 20 hin gerichtete Klemmnuten 133, die dann wiederum in einem, einem U entsprechenden, freien Ende 134 enden. Diese Nuten 133 im Element 131 gestatten es, hier von unten oder oben die Klammer 132 in die untere oder obere der Nuten 133 zu legen und die freien Enden 135 der Klammer 132 aufeinander zuzudrücken, um diese freien Enden 135 dann in fluchtende und zum U-förmigen Boden des Elements 132 parallele Abschnitte zu bringen, so dass dabei die U-förmigen Nuten 133 aufeinander zu gepresst sind und dabei das dazwischen eingelegte elastische Band 20 klemmen und verformen, und einen Rückzug des freien Endes 21 des Bandes 20 aus dem Aufnahmeraum 133 verhindern.

Die Figs. 8A bis 8C zeigen ein weiteres Ausführungsbeispiel eines Abschlusses 140 mit einer zweiteiligen Ausführung, umfassend eine Klemme 141 und eine Klammer 142. In allen Zeichnungen der vorliegenden Beschreibung werden ähnliche Merkmale mit ähnlichen Bezugszeichen versehen, so dass hier die Rückwand 147 in die nach vorne gerichtete freien Enden 144 übergehen, die durch die nach innen ausgerichteten Klemmnuten 143 mit dann nach aussen gebogenen freien Enden 144 die gleiche Funktion wie die entsprechenden Merkmale des Ausführungsbeispiels nach Figs. 7A bis 7C ausführt. Der Unterschied liegt hier darin, dass die Rückwand 147 über zwei über die Oberseite 149 bzw. Unterseite nach oben und nach unten hinaus stehende überstehende Flansche 148 hat, die dann mit dem in der späteren Beschreibung erwähnten Verbinder 200 in einen Formschluss eintreten können. Die Fig. 8C zeigt dann das elastische Element 10 bestehend aus dem flexiblen Seilelement 20 und dem Abschluss 140 an den jeweiligen freien Enden 21 und 22 des flexiblen Seilelements 20.

Die Figs. 9A bis 9C zeigt einen weiteren Abschluss 150, bei dem die Rückwand 157 ähnlich zur Rückwand 147 im offenen Zustand des Verbinders leicht aufgebogen dargestellt (durch mittige Doppellinie) ausgestaltet ist und ohne Flansch der Ausführung der Figur 8 entspricht.

Beim Ausführungsbeispiel nach der Fig. 7A steht die Rückwand 137 jeweils rechts und links seitlich über die ansonsten abgeschnittenen oder ausgestanzten Laschen der Klemme 131 über. Bei der Fig. 8A entspricht dieses seitliche Überstehen dem Überstehen der Flansche 148 oben und unten, so dass bei diesen Ausführungsbeispielen sich auch ein mit einer Schulter gegenüber dem Verbinder 200 erreichter Formschluss ergeben kann. während das Ausführungsbeispiel nach Fig. 9 ohne solche überstehenden Elemente auskommt und die Verbindung durch einen sich selbst verstärkenden Klemmschluss realisiert werden kann.

Die Figs. 10A bis 10C zeigen ein weiteres Ausführungsbeispiel eines Abschlusses 160, der im Gegensatz zu den eben beschriebenen Abschlüssen einstückig ausgestaltet ist. Hier ist die Klemme 161 mit der einem senkrecht zum einzulegenden flexiblen Seilelement 20 ausgestalteten Mittelteil der Rückwand 167 und zwei leicht vom flexiblen Seilelement 20 wegweisenden weiteren Teilabschnitten der Rückwand 167 wiederum mit den Klemmnuten 163 versehen, die in den freien Enden 164 enden. Unterschiedlich ist hier, dass in der unteren Klemmnut 163 seitlich überstehend links und rechts Klammernasen 162 vorgesehen sind, die mit ihren freien Enden 165 aufeinander zu gebogen werden und den oberen Abschnitt umgreifend in die obere Klemmnut 163 eingreifen, um dann ebenfalls in paralleler Ausrichtung zueinander liegend zu kommen.

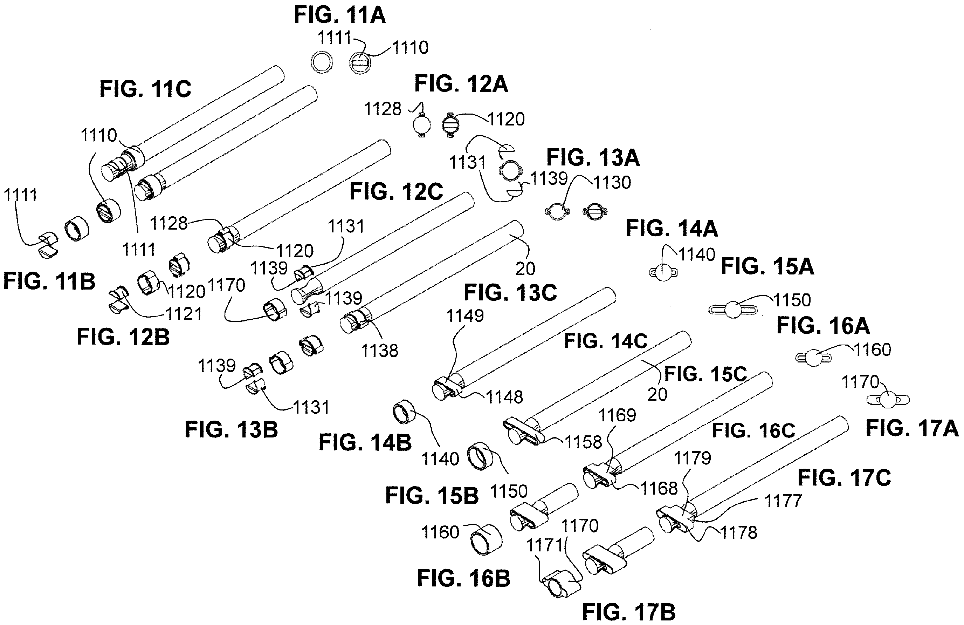

Die Figs. 11A bis 11C, Figs. 12A bis 12C, Figs. 13A bis 13C, Figs. 14A bis 14C, Figs. 15A bis 15C, Figs. 16A bis 16C, Figs. 17A bis 17C zeigen jeweils eine Vorderansicht eines Abschlusses 1110, 1120, 1130, 1140, 1150, 1160, 1170, eine perspektivische Ansicht vor dem Klemmen und eine weitere perspektivische Ansicht nach erfolgter Klemmung am elastischen Band 20. Teilweise sind, wie in der Kurzbeschreibung der Zeichnungen notiert die Zeichnungen einmal als Explosionszeichnung der einzelnen Elemente und einmal im Zusammenbau dargestellt, so in Fig. 11A, Fig. 11B, Fig. 11C, Fig. 12A, Fig. 12B, Fig. 13A, Fig. 13B, Fig. 13C, Fig. 16B und Fig. 17B.

Beim Ausführungsbeispiel nach den Figs. 11A bis 11C weist der Abschluss 1110 einen oben und unten eingelegten oder in den Abschluss einstückig integrierten kreissegmentförmigen Klemminnenkörper 1111 auf, der dann das flexible Seilelement 20 zusammendrückt und damit klemmt. Der Ring wird über das Gummiseil zu seiner finalen Position geschoben (obere Zeichnung der Fig. 11C). Dort wird das Gummiseil von der Endseite her mit einem Werkzeug stark zusammengepresst. Gleichzeitig werden von der Seil-Zuglängenseite her zwei teilkreis-förmige Elemente 1121 in die durch die Pressung entstandenen Leerräume über und unter der Klemmzone eingeschossen. Beim Rückzug des Klemmwerkzeuges verklemmen sich die Elemente 1121 mit dem Ring und bewirken dadurch die erforderliche Klemmung und Verformung.

Bei dem Ausführungsbeispiel nach Figs. 12A bis 12C hat der Ring 1110 die Form einer klassischen 2-Ohr-Klemme 1120 mit je einer oben und unten überstehenden Rippe 1128, die nach der Pressung zur Reduktion des Ringumfangs in der Funktion einem überstehenden Flanschabschnitt entspricht. Vor der Klemmung der beiden Rippen 1128 werden zwei teilkreis-förmige Klemmelemente 1121 wie vorgängig beschrieben von der Zuglängen-Seite des Seils her eingepresst. Die Klemmelemente 1121 verstärken die Verformung des elastischen Strangs 20.

Beim Ausführungsbeispiel nach den Figs. 13A bis 13C sind diese 2-Ohr-Klemmen-Flanschabschnitte 1138 jeweils seitlich links und rechts angeordnet und befinden sich damit in paralleler Gegenüberlage zu den eingesetzten oder integrierten Klemminnenkörpern 1131. Damit das Gummiseil oder seine Umhüllung beim Klemmvorgang nicht seitlich eingeklemmt und beschädigt werden können, verfügen die teilkreisförmigen Klemminnenkörper 1131 über je einen bogenförmigen Fortsatz 1139, der sich beim Zusammenpressen in eine entsprechende Ausnehmung am gegenüberliegenden Klemminnenkörper einschiebt und damit das seitliche Wegdriften des Gummis verhindert. Dafür ist in Fig. 13B der Klemminnenkörper 1131 mit seinen seitlichen überstehenden Rändern und dem Fortsatz 1139 in Explosionsansicht und zusammengesetzt dargestellt und in Fig. 13C mit zwei Gummiseilen übereinander, einmal mit über der Einklemmstelle angeordneten Klemminnenkörpern 1131 und einmal im geschlossenen Zustand.

Beim Ausführungsbeispiel nach den Figs. 14A bis 14C bzw. Figs. 15A bis 15C ist der Ring 1140 bzw. 1150 grösser als der Durchmesser des einzulegenden flexiblen Seilelementes 20 und er wird durch Druck auf seine Oberseite 1149 und Unterseite abgeflacht, sodass sich der Ring in zwei gegenüberliegende parallele Flächen mit seitlichen überstehenden Rippen 1148 und 1158 ausbildet, die wiederum Flanschfunktionen aufweisen. Dabei weist der Ring 1150 einen grösseren Durchmesser als der Ring 1140 auf, so dass die sich durch die Klemmung ergebenen seitlichen Bereiche 1158 weiter über das flexible Seilelement 20 überstehen, als die seitlichen Bereiche 1148. Der Unterschied zwischen den Ausführungsbeispielen der Fig. 14 und Fig. 15 liegt in der jeweiligen Grösse des Ringes.

Die Figs. 16A bis 16C zeigen einen Ring 1160, der ähnlich zu den vorgenannten Beispielen zu einem Oval zusammengedrückt wird, was in der zweiten hinteren perspektivischen Ansicht der Fig. 16B zu erkennen ist, wobei sich die überstehenden Rippen 1168 ergeben. Es bleibt dann nach einem Entfernen der Seitenteile dabei aber eine rückseitige Oberseite 1169 stehen, die in Richtung des flexiblen Seilelementes 20 ausgerichtet ist. Auf der Unterseite ist eine entsprechende zum flexiblen Seilelement 20 hin überstehende Fläche vorgesehen. Bei dieser Konfiguration werden bei den beidseitig überstehenden Flanschen in Richtung Zuglänge des Seils jeweils die äusseren Ecken während dem Klemmprozess abgestanzt. Damit bleibt das Seil überdeckt, während an den End-Ecken der Flansche leicht zurückgesetzte Anschläge entstehen. Die entsprechenden Aufnahme- und Anliegeflächen im Verbinder sind so gestaltet, dass die vorstehende Seilüberdeckung über die Aussenkante des Verbinders hinausragt und somit zwischen Verbinder und Seil bei bestimmungsgemässen Gebrauch des Trampolins keine direkte Berührung entsteht,

Bei dem Ausführungsbeispiel nach den Figs. 17A bis 17C handelt es sich um 2-Ohr-Klemmen mit gefüllten Ohrzonen 1171, die funktionale Klemminnenkörpern entsprechen. Diese befinden sich auf den beiden Seiten des Abschlusses 1170 und werden zu entsprechenden überstehenden massiven Rippen 1178 ausgeformt, wobei sich zwischen gequetschtem Gummiseil und dem Rippen 1178 ein kleiner Hohlraum bildet. Die in Richtung des Bandes 20 überstehende Rückseite 1179 weist nach dem Zusammenpressen des Rings zudem auch gefalzte seitliche Wände 1177 aus dem Ringmaterial auf.

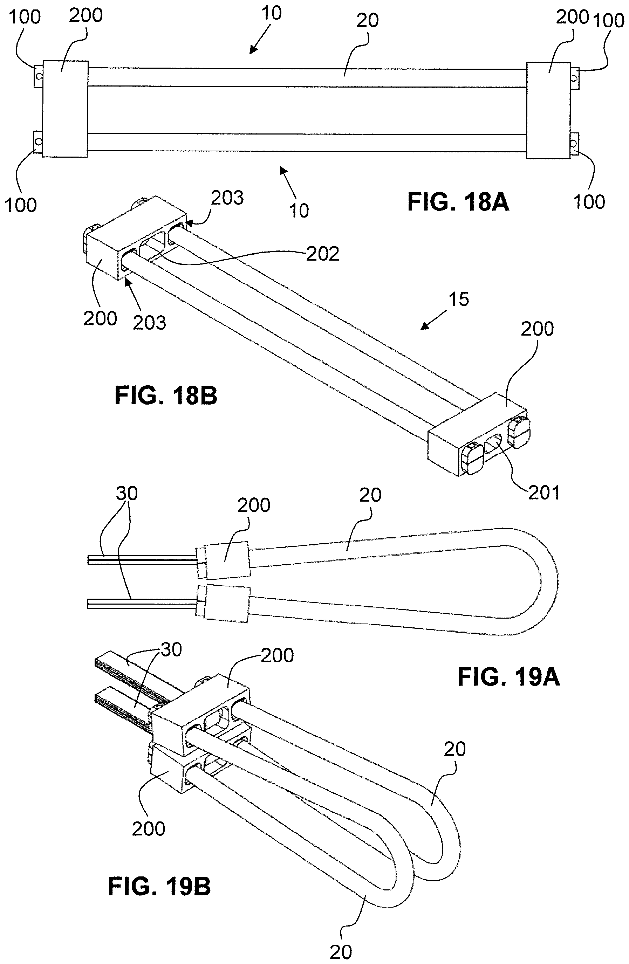

Die Figs. 18A und 18B zeigen eine Draufsicht auf zwei elastische Elemente 10 mit jeweils Abschlüssen 100 an ihren gegenüberliegenden freien Enden, die paarweise in entsprechende Verbinder 200 eingelegt sind. Insgesamt ergibt sich somit eine Verbindungseinheit 15 mit zwei elastischen Elementen 10 mit jeweils einem weiteren Abschluss 200 gemäss einem Ausführungsbeispiel der Erfindung, eingesetzt in zwei Verbinder oder Verbindungselemente 200.

Die Verbinder 200 sind, wie es die Fig. 18B zeigt, quaderförmige Elemente mit zwei seitlich vorgesehenen durchgehenden Löchern 203, durch welche die flexiblen Seilelemente 20 hindurchgeführt sind, bevor die Abschlüsse 100 auf das flexible Seilelement 20 aufgebracht werden. Dann wird durch Ineinanderschieben der vorher aufgesetzten Verbinder 200 durch den sich ergebenden Form- und Kraftschluss aus den sich verjüngt zusammenlaufenden Abschlüssen 100 die Möglichkeiten genutzt, diese Elemente ohne seitliche Öffnungen in den Verbindern 200 einzuführen. Dafür ist der Durchmesser der Abschlüsse (beispielsweise aus den Figs. 11 bis 17) bei entsprechenden Ausführungsbeispielen mindestens teilweise grösser als der des flexiblen Seilelementes 20. Es ist festzuhalten, dass das flexible Seilelement 20 hier als im Querschnitt kreisförmig dargestellt ist. Dies kann in anderen Ausführungsbeispielen oval, elliptisch oder flach sein.

Bei einem anderen Ausführungsbeispiel ist es möglich, die Verbinder 200 seitlich mit durchgehenden Schlitzen zu versehen, um die elastischen Elemente 10 seitlich einzuführen, wie es in Fig. 13 der WO 2011/032173 A1 dargestellt ist. Mittig des Verbinders 200 ist parallel zu den durchgehenden Öffnungen für die elastischen Elemente 20 ein weiterer zu diesen parallel verlaufender Durchgangskanal eingesetzt, der auf der nach innen liegenden Seite eine grössere Öffnung 202 aufweist, als die nach aussen gerichtete Öffnung 201. Diese jeweils durchgehenden und parallel zu den Öffnungen der flexiblen Seilelemente 20 gehaltenen Durchgänge werden im Zusammenhang mit der Beschreibung der Fig. 19A und 19B klarer ersichtlich.

Dort ist in der Figur 19A eine Seitenansicht auf die Verbindungseinheit nach Fig. 18A mit zu einer Schlaufe geformten flexiblen Seilelementen 20 und zwei in die Verbindungseinheiten 200 eingehängte Zugbänder 30 zu sehen. Die Zugbänder können insbesondere U-förmig als Schlaufe zurückgeführte doppellagige Bänder 30 sein, die in der grösseren Öffnung 202 dadurch gehalten werden, dass in der sich durch das U der Schlaufe ergebene grösseren Freiraum ein Blockierstössel eingesetzt wird, der insbesondere in entsprechenden Führungsnuten in der Öffnung 202 gelagert sein kann. Diese Elemente können auch entsprechend in dem Verbinder 200 verklebt oder kunststoffverschweisst sein. Der Blockierstössel entspricht in den später beschriebenen Ausführungsbeispielen dem dort lose eingesetzten Bandverbinder 340. Funktional ist der Stössel bei Zugbeanspruchung auch ähnlich zum Innenzylinder 371 des Clips 370.

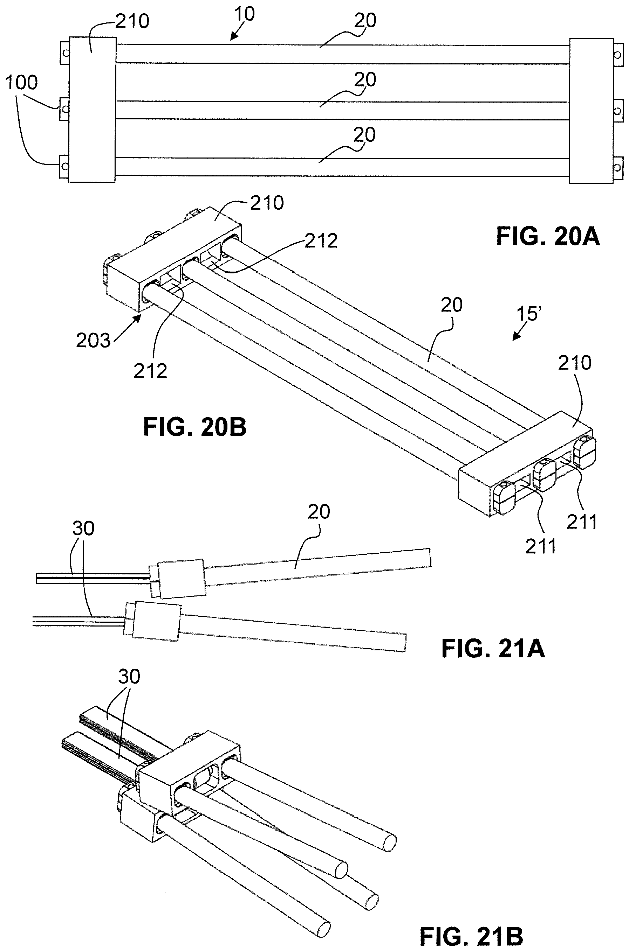

Die Figs. 20A und 20B zeigen ein Ausführungsbeispiel einer Verbindungseinheit 15', ähnlich zu den Figs. 18A und 18B, wobei hier drei flexible Seilelemente 20 nebeneinander angeordnet sind. Diese sind auch wieder mit dem Abschluss 100 versehen, der in abgeänderten Verbindern 210 eingesetzt sind, denn dieser Verbinder 210 weist jeweils drei durchgehende Öffnungen 203 für die flexiblen Seilelemente 20 auf, zwischen denen dann jeweils zwei Öffnungen 211 bzw. 212 vorgesehen sind, um zwei Bänder 30 hindurch zu führen.

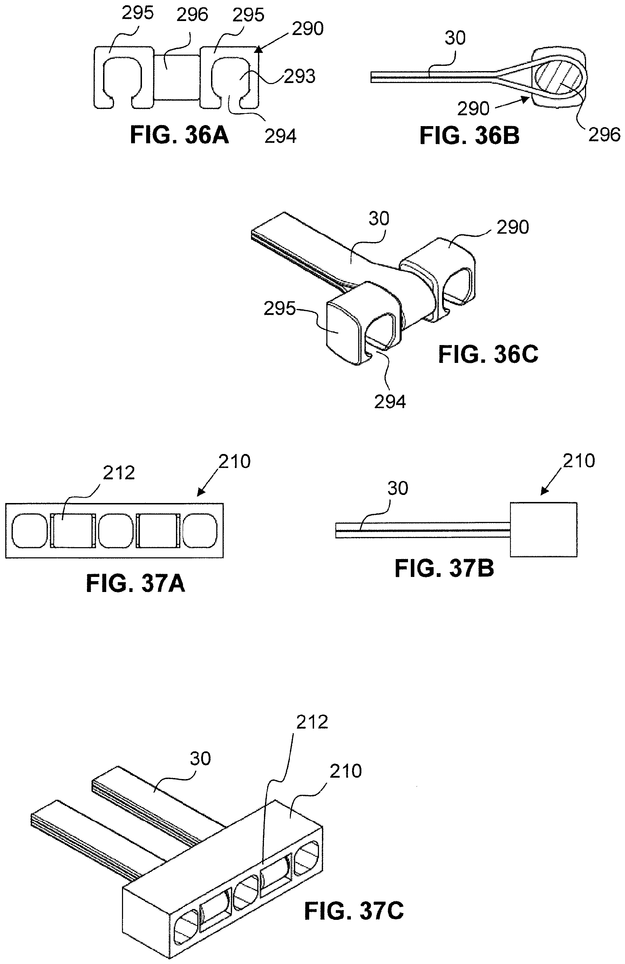

Die zu Fig. 20A gehörende Seitenansicht auf die Verbindungseinheit mit zu einer Schlaufe geformten flexiblen Seilelementen 20 und zwei in die Verbindungseinheiten 200 eingehängte Zugbänder 30 ist weiter hinten im Zusammenhang mit Fig. 37 beschrieben.

Die Fig. 21A und die Fig. 21B zeigen eine ähnliche Ansicht wie die Fig. 19A bzw. Fig. 19B als Ausführungsform der Fig. 18A. In der Regel kommen die Verbinder 200 übereinander zu liegen, aber sie können auch zueinander in Längsrichtung versetzt sein.

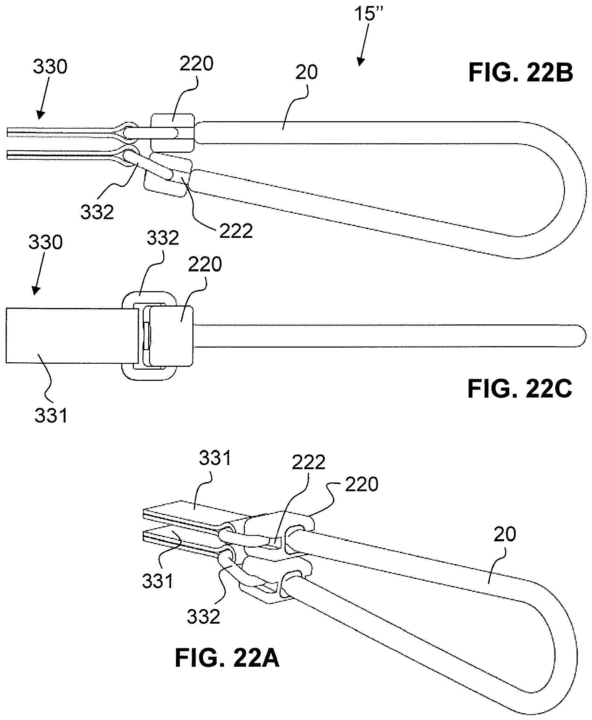

Die Fig. 22A zeigt eine perspektivische Ansicht einer Verbindungseinheit 15" nach einem Beispiel nicht gemäss einem Ausführungsbeispiel der Erfindung mit einem Bandverbinder 330. Der Bandverbinder 330 besteht aus einem Zugband 331, welches eine mindestens teilweise ringförmige Schnalle 332 hält. Das zur Schlaufe geformte flexible Seilelement 20 ragt mit seinen in den Figuren nicht erkennbaren Abschluss durch einen Verbinder 220 mit einer einzelnen durchgehenden zentralen Öffnung für den besagten Abschluss. Der Bandverbinder 330 in Gestalt des Zugbandes 331 mit einer Endschlaufe, nimmt eine O-förmige oder C-förmige Schnalle 332 auf. Im dargestellten Ausführungsbeispiel ist es eine C-förmige Schnalle 332, die sich in entsprechenden seitlichen Nuten des Verbinders 220 in einen Formschluss begibt und das flexible Seilelement 20 in seiner Verlängerung zieht. Dafür sind jeweils seitliche Nuten 222 in dem Verbinder 220 vorgesehen.

Die Fig. 23A und 23B zeigen eine ähnliche Ansicht, wie das Ausführungsbeispiel nach Fig. 19B, wobei in Fig. 23A der Verbinder 200 in Alleinstellung dargestellt ist. Es ist deutlich ersichtlich aus der Fig. 23A, dass ein bandseitig ausgerichtet grösseres zentrales Loch 202 vorgesehen ist, an das sich eine innere Schulter anschliesst, welche die kleinere, das durchgehende Band 30 aufnehmende Öffnung definiert. Seitlich dazu befinden sich links und rechts die konisch, von der Betrachtungsseite der Fig. 23A sich ausweitende Öffnungen 203. Sofern kein Verbinder 100 sondern ein Verbinder mit einem Flansch vorgesehen ist oder mit einer oberen oder seitlichen Rippe kann die Öffnung 203 auch einen durchgehend gleichen Durchmesser haben oder zu zumindest teilweise eine Ausnehmung für die Flanschbereiche vorsehen.

Die Figs. 24A und 24B zeigen im grösseren Detail das Ausführungsbeispiel des Verbinders 210 nach den Figs. 20 und 21. Hier gilt das eben gesagte in Bezug auf die Öffnungen 203, die hier als drei Öffnungen 213 für die elastischen Elemente 10 vorliegen. Die Öffnungen 212 sind dagegen etwas anders als die die Öffnungen 202 ausgestaltet und laufen sich über die gesamte Höhe verjüngend in der Tiefe zur Durchgangsöffnung als Schlitz für das entsprechende Band 30. Sie bleiben in der Breite dagegen immer gleich gross.

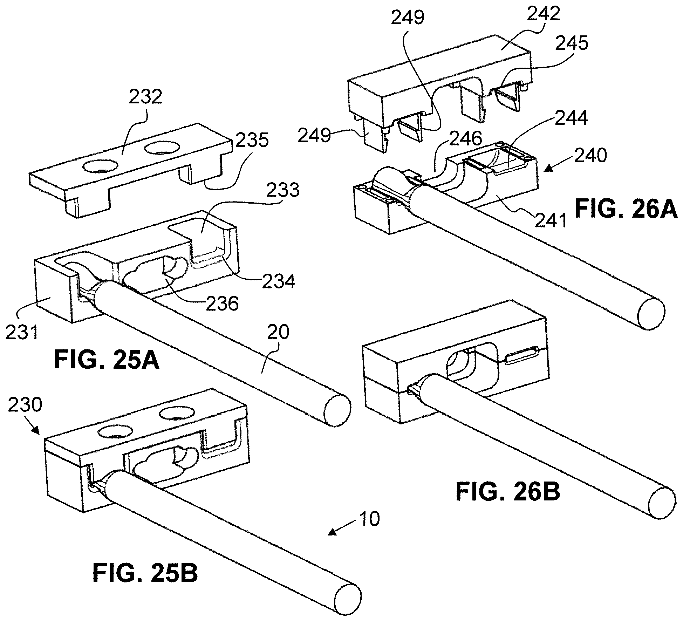

Die Fig. 25A zeigt einen weiteren, zweiteiligen Verbinder 230 nach einem Ausführungsbeispiel der Erfindung in einer perspektivischen Ansicht mit eingelegtem elastischem Element 10 in geschlossener Ausführung. Die Fig. 25B zeigt eine perspektivische Explosionsansicht des Verbinders 230 aus Fig. 25A. Bei dem Ausführungsbeispiel nach Figs. 25A und 25B sind Abschluss und Verbinder zu einer Einheit zusammengefasst. Dieser Abschluss ist im Verbinder 230 dadurch integriert, dass in einem grösseren Aufnahmeraum 233 eine zur Mündung gerichtete, hier untere Rippe 234 vorgesehen ist und dass auf das Unterteil 231 des Verbinders 230 ein Oberteil 232 gesetzt wird, welches die Oberseite des Unterteils 231 vollständig abdeckt und dabei im Bereich der hervorstehenden Rippe 234 ein über den flächigen Bereich des Oberteils hinausstehendes, die Öffnung im wesentlichen verschliessendes Teilstück mit eine Klemmrippe 235 versehen ist. Mit einem weiteren, in der Zeichnung nicht dargestellten Formschluss, einem Verschweissen oder Verschrauben, wird das Oberteil 232 mit dem Unterteil 231 verbunden und hält somit auf der linken und auf der rechten Seite der zentralen Öffnung 236 die Bänder 20. Das Band 20 ist dabei schon in der durch die Klemmung vorgegebenen Form dargestellt.

Die Figs. 26A und 26B zeigen in einer offenen bzw. geschlossenen Ansicht ein weiteres Ausführungsbeispiel ähnlich zur Fig. 25, bei der der Verbinder 240 aus seinem Unterteil 241 und einem Oberteil 242 besteht. Die Rippe 244 im Unterteil 242 steht im Oberkörper eine entsprechend angeordnete komplementäre Rippe 245 gegenüber, zwischen denen der eingelegte Bandanteil eingeklemmt wird. Hierbei ergibt sich ein Formschluss zwischen Oberteil 242 und Unterteil 241 über die mit Widerhaken versehenden Verriegelungslaschen 249. Eine in der Rückseite des Oberteils 242 vorgesehene Öffnung arbeitet mit der in dem Unterteil 241 vorgesehenen nach hinten gerichteten Ausnehmung 246 zusammen und dient wie im Ausführungsbeispiel der Fig. 25 als Durchgangsöffnung für die Bandschlaufe 30. Wie bei Fig. 25A ist in Fig. 26A das freie Ende des Bandes 20 in der durch das Aufsetzen des Oberteils 242 bewirkte Klemmung in der dadurch vorgegebenen Form dargestellt.

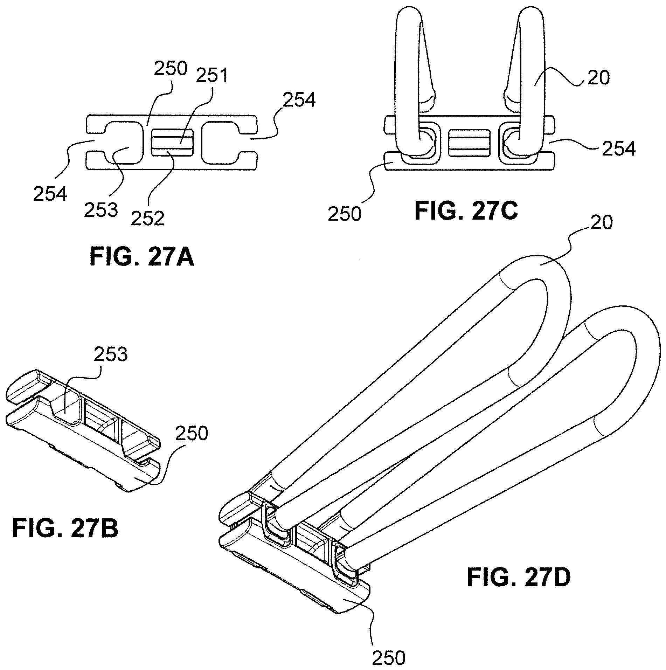

Die Fig. 27A zeigt eine Vorderansicht auf einen weiteren Verbinder 250 gemäss einem Ausführungsbeispiel mit einer zentralen Öffnung 252, die im hinteren Teil in einen konischen Schlitz 251 übergeht. Die Fig. 27B zeigt eine perspektivische Ansicht des Verbinders 250, die Fig. 27C zeigt eine Vorderansicht auf den Verbinder 250 mit zwei flexiblen Seilelementen 20, teilweise mit Abschlüssen und Fig. 27D zeigt eine perspektivische Ansicht des Gegenstandes aus Fig. 27C. Zur Erleichterung der visuellen Lesbarkeit wurde auf die Darstellung des Verbindungselementes 200 bei den Oberen Enden der Seilabschnitte 20 in der Darstellung 27D verzichtet. Wie bei FIG 18A gezeigt, sind immer beide Enden der parallel nebeneinander geführten Seilstränge 20 mit je einem Verbinder ausgestattet. Die durchgehenden Öffnungen 253 für die Abschlüsse sind hier seitlich offen, um eine bereits vorfabrizierte Verbindungseinheit 15, 15' etc. seitlich einlegen zu können. Es ist dann vorteilhafterweise ein Ausführungsbeispiel des Abschlusses mit einem Flansch aus den Ausführungsbeispielen mit Elementen mit den Bezugszeichen 137, 148, 1128, 1138, 1148, 1158, 1168 oder 1178. Die seitlichen Öffnungen 254 sind vorzugsweise Schlitze. Die durchgehenden Öffnungen 253 sind im Querschnitt quadratisch.

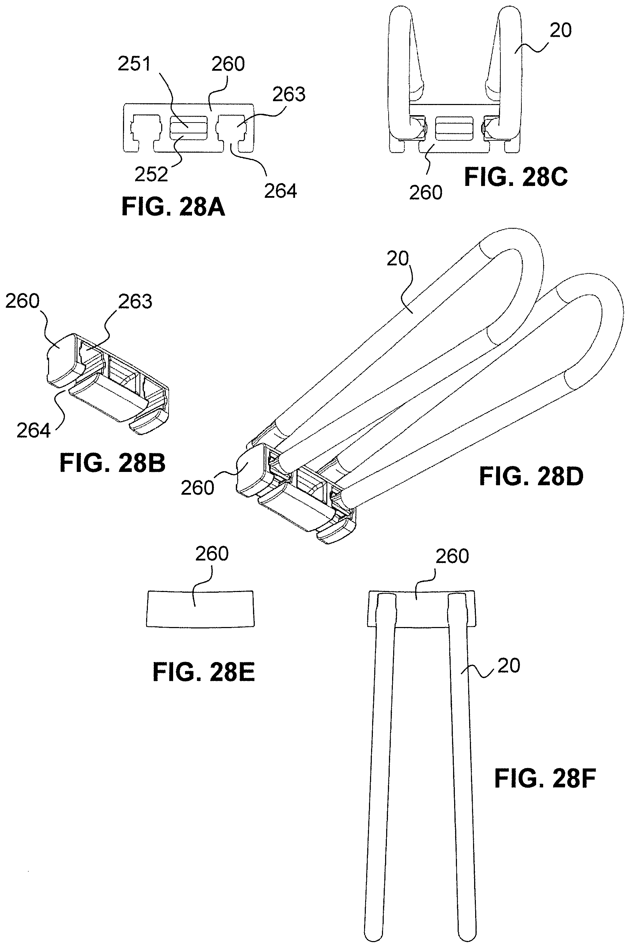

Die Fig. 28A zeigt eine Vorderansicht auf einen weiteren Verbinder 260 gemäss einem Ausführungsbeispiel mit einer zentralen Öffnung 252 wie anhin, die im hinteren Teil in einen konischen Schlitz 251 übergeht. Die Fig. 28B zeigt eine perspektivische Ansicht des Verbinders 260, die Fig. 27C zeigt eine Vorderansicht auf den Verbinder 260 mit zwei flexiblen Seilelementen 20, teilweise mit Abschlüssen und Fig. 28D zeigt eine perspektivische Ansicht des Gegenstandes aus Fig. 28C. Die durchgehenden Öffnungen 263 für die Abschlüsse sind hier nach unten offen, um eine bereits vorfabrizierte Verbindungseinheit 15, 15' etc. seitlich einlegen zu können. Es ist dann vorteilhafterweise ein Ausführungsbeispiel des Abschlusses mit einem Flansch aus den Ausführungsbeispielen mit Elementen mit den Bezugszeichen 137, 148, 1128, 1138, 1148, 1158, 1168 oder 1178. Die nach unten gerichteten Öffnungen 264 sind vorzugsweise Längsschlitze. Die durchgehenden Öffnungen 263 sind im Querschnitt quadratisch. Wie bei Fig. 27C und Fig. 27D wurde auch bei Fig. 28C und Fig. 28D auf die Darstellung des zweiten Verbinders verzichtet. Die Figs. 28E und 28F zeigen dann den Verbinder 260 in jeweils einer Draufsicht, aus der hervorgeht, dass der Korpus des Verbinders 260 in Richtung des einzulegenden Zugbandes und der flexiblen Seilelemente 20 leicht gekrümmt ausgestaltet ist, um einen Radius zu haben, der im wesentlichen dem Radius des Kreises an dem Montageort der Verbinder 260 in Bezug auf die zentrale Matte entspricht.

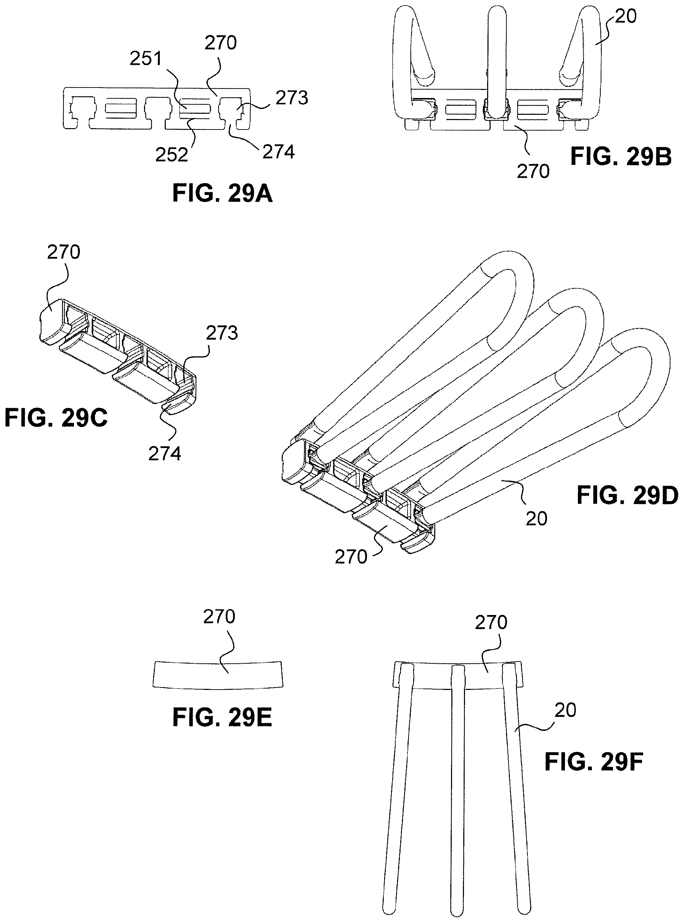

Die Fig. 29A zeigt eine Vorderansicht auf einen weiteren Verbinder 270 gemäss einem Ausführungsbeispiel; Fig. 29B eine perspektivische Ansicht; Fig. 29C eine Vorderansicht auf den Verbinder nach Fig. 29A mit drei flexiblen Seilelementen 20, teilweise mit Abschlüssen; Fig. 29D eine perspektivische Ansicht des Gegenstandes aus Fig. 29C; sowie Fig. 29E und Fig. 29F Draufsichten auf den Gegenstand aus Fig. 29D. Anstelle bei Fig. 28A zwei nach unten gerichtete, seitliche Öffnungen 263 mit einer zentralen Öffnung 252 für den Bandverbinder zu haben, bestehen hier drei nach unten gerichteten Öffnungen 274, von denen eine zentral angeordnet ist, so dass zwei Zugbandaufnahmen 251, 253 links und rechts der zentralen Öffnung 274 vorgesehen sind. Ansonsten entspricht der sich aus den Draufsichten klar als gekrümmt zeigende Verbinder 270 sehr ähnlich zu dem Ausführungsbeispiel aus Fig. 28.

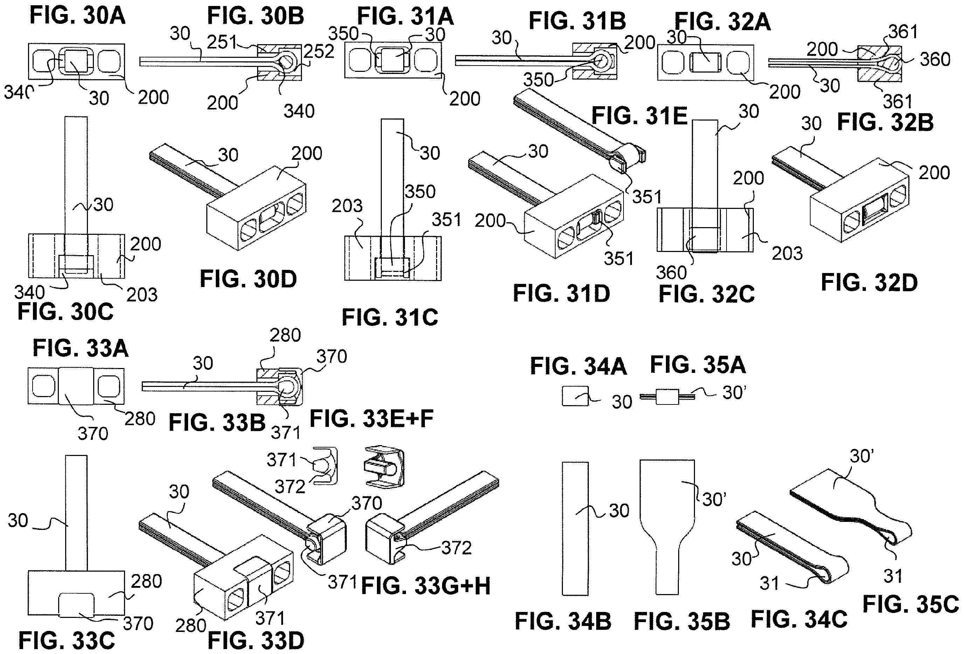

Die Figs. 30 bis 35 zeigen eine Vielzahl von Ausführungsformen für die Verbindung des Verbindungsbandes 30 mit dem Verbinder 200. Dabei wird jeweils der Verbinder 200 mit durchgehenden Öffnungen 203 als mögliches Ausführungsbeispiel verwendet. Es ist aber klar, dass auch andere Verbinder 200 eingesetzt werden können. Die Ausführungsformen zeigen jeweils ein zentrales Verbindungsband 30 bei zwei seitlich der zentralen Verbindung anzuordnenden flexiblen Seilelementen 20. Bei dem in den obigen anderen Ausführungsbeispielen gezeigten drei flexiblen Seilelementen 20, müssten dann drei solcher Öffnungen 203 im Verbinder 200 vorgesehen sein und die rückwertigen Bänder wären entweder einzeln oder zusammen zu nehmen und dann mit dem Trampolin zu verbinden.

Die Fig. 30A zeigt eine Vorderansicht auf einen Verbinder 200 gemäss einem Ausführungsbeispiel mit eingelegten Zugband 30 und Bandverbinder 340. Die Fig. 30B zeigt eine geschnittene Seitenansicht des Verbinders 200, die Fig. 30C eine teilweise geschnittene Draufsicht auf den Gegenstand aus Fig. 30A und Fig. 30D eine perspektivische Ansicht desselben. Der Bandverbinder 340 ist ein Zylinder, dessen Länge so bemessen ist, um ohne viel Spiel in die Öffnung 252 einschiebbar zu sein. Der Durchmesser des Zylinders ist dergestalt, dass er grösser als die kleinere Abmessung des Schlitzes 251 ist, so das er insbesondere, wenn er mit dem Zugband 30 umwickelt ist, nicht durchrutschen kann. Damit wird bei Ausübung von Zug auf das Zugband 30 der Zylinder angezogen, so dass schlussendlich das Zugband 30 am Schlitz 251 ansteht und vom Zylinder angedrückt wird.

Die Fig. 31A, Fig. 31B, Fig. 31C, Fig. 31D sowie Fig. 31E zeigen Ansichten desselben Verbinders 200 wie Fig. 30 mit einem anderen Bandverbinder 350. Dieser besteht ebenfalls aus einem Zylinder, der aber an den seitlichen Enden in rechteckige Flanschbereiche 351 übergeht, die Dimensionen aufweisen, dass sie in die Öffnung 252 einschiebbar sind und am Schlitz 251 anstehen. Sie stehen in Art einer U-förmigen Klammer über die umgelenkte Schlaufe über und werden mit ihrer Zylinderseite, die stegartig die beiden Klammerflanschbereiche 351 in die Ausnehmung im Verbinder 200 eingelegt. Damit wird die Zugkraft direkt vom Zugband 30 des Bandverbinders 350 über dessen Flanschbereiche 351 auf die Wand des Schlitzes 251 und damit auf den Körper des Verbinders 200 übertragen.

Die Fig. 32A, Fig. 32B, Fig. 32C sowie Fig. 32D zeigen Ansichten desselben Verbinders 200 wie Fig. 30 mit einem anderen Bandverbinder 360. Dieser besteht im Querschnitt aus einem einen Tropfen bildenden Zylinder mit in Zugband-Richtung sich verjüngendem Querschnitt. Hier ist die zentrale Öffnung des Verbinders 200 an diese Form angepasst, das die obere und untere Oberfläche 361 sich stetig und dem Tropfenquerschnitt folgend von der ansonsten grösseren Öffnung 252 zum Schlitz 251 zusammenläuft, um den Bandverbinder 360 in einem das Zugband 30 wenig belastenden Klemmschluss auf bestimmten Bereiche des Zugbandes 30 zu halten. Damit wird die Zugkraft direkt vom Zugband 30 des Bandverbinders 360 über die gegenüberliegenden Flächen von Bandverbinder 360 und Oberflächen des sich verjüngenden Schlitzes und somit über grössere Flächen übertragen.

Die Fig. 33A, Fig. 33B, Fig. 33C sowie Fig. 33D zeigen Ansichten eines weiteren Verbinders 280 mit einem komplementären Bandverbinder 370. Dieser besteht aus einer C-förmigen Klammer, die sich auf der hierfür leichte Ausnehmungen aufweisenden Oberfläche des Verbinders 280 abstützt. Dabei ist der Klammer seitlich auf der in der Fig. 33D abgewandten Seite ein Zylinder 371 zugeordnet und befestigt, um den das Zugband 30 geführt ist. Damit wird die Zugkraft direkt vom Zugband 30 des Bandverbinders 370 auf die C-Klammer und von dort auf die Oberflächen des Körpers des Verbinders 280 übertragen.

Die Fig. 33E zeigt eine Seitenansicht auf den Bandverbinder aus Fig. 33A, Fig. 33F dann eine perspektivische Ansicht des Bandverbinders, und Fig. 33G und Fig, 33H zwei perspektivische Ansichten des Bandverbinders aus Fig. 33E mit eingelegtem Band.

Die Oberseite und Unterseite des Verbinders 280 können auch in der Mitte leichte Ausnehmungen aufweisen, auf die sich die C-Klammer 370 positionsgenau aufstecken lässt. Im Zentrum der C-Öffnung befindet sich ein Zylinder 371. Dieser ist auf der einen Seite über einen Verbindungssteg 372 mit der Rückseite der C-Klammer 370 verbunden. Beim Montieren des Verbinders 280 wird der Zylinder 371 ins Schlaufenauge des Zugbandes 30 bis zum Anschlag an den Verbindungssteg 372 gesteckt. Anschliessend wird die C-Klammer 370 mit dem integrierten Zugband 30 so auf den Verbinder 280 geschoben, dass die C-Klammer in die Ausnehmungen auf der Ober- und Unterseite des Verbinders 280 eingreifen. Damit wird die Zugkraft direkt vom Zugband 30 über den C-förmigen Bandverbinder 370 auf den Körper des Verbinders 280 übertragen.

Die Fig. 34A zeigt eine Vorderansicht und die Fig. 34B eine Draufsicht auf das Zugband 30 nach einer der Figs. 30 bis 33, wobei die Fig. 34C eine perspektivische Ansicht des zu einer Schlaufe geformten Zugbandes darstellt. In die Schlaufenöffnung 31 wird in den vorgenannten Ausführungsbeispielen jeweils ein zylindrischer Körper (im Sinne der mathematischen Definition eines Zylinders) eingesetzt, der jeweils direkt, über Flansche oder über eine äussere Halterung die Zugkraft auf den Verbinder überträgt.

Die Fig. 35A zeigt eine Vorderansicht, die Fig. 35B eine Draufsicht und die Fig. 35C eine perspektivische Ansicht auf ein weiteres Zugband 30'. Dieses weist dieselbe Schlaufenöffnung 31 auf, dann geht das dann doppelt liegende Band in einen breiteren von der Schlaufe wegweisenden Abschnitt über, um eine grössere Befestigungsfläche zu erreichen.

Die Fig. 36A zeigt eine Vorderansicht auf einen weiteren Verbinder 290 nach einem Beispiel nicht gemäss einem Ausführungsbeispiel der Erfindung mit eingelegtem Zugband 30. Die Fig. 36B zeigt eine geschnittene Seitenansicht des Verbinders 290 und die Fig. 36C eine perspektivische Ansicht des Gegenstandes aus Fig. 36A. Der Verbinder 290 ist knochenförmig und hat links und rechts jeweils einen Aufnahmekörper 295 für ein elastisches Element 10 mit einer durchgehenden Öffnung 293 und einem nach unten offenen Schlitz 294 zum Einlegen des elastischen Elementes 10. Die beiden Aufnahmekörper sind über einen einen geringeren Durchmesser aufweisenden Verbindungssteg 296 verbunden, beispielsweise einstückig als Spritzgussstück, so dass sich seitliche Schultern bilden. Um den im Querschnitt rund, elliptisch oder oval ausgelegten Verbindungssteg 296 ist das Band 30 gelegt.

Die Fig. 37A zeigt eine Vorderansicht auf den Verbinder 210 gemäss dem Ausführungsbeispiel nach Fig. 20A mit eingelegtem Zugband 30 in die Öffnung 212, wobei Fig. 37B eine Seitenansicht des Verbinders 210 und Fig. 37C eine perspektivische Ansicht des Gegenstandes zeigt.

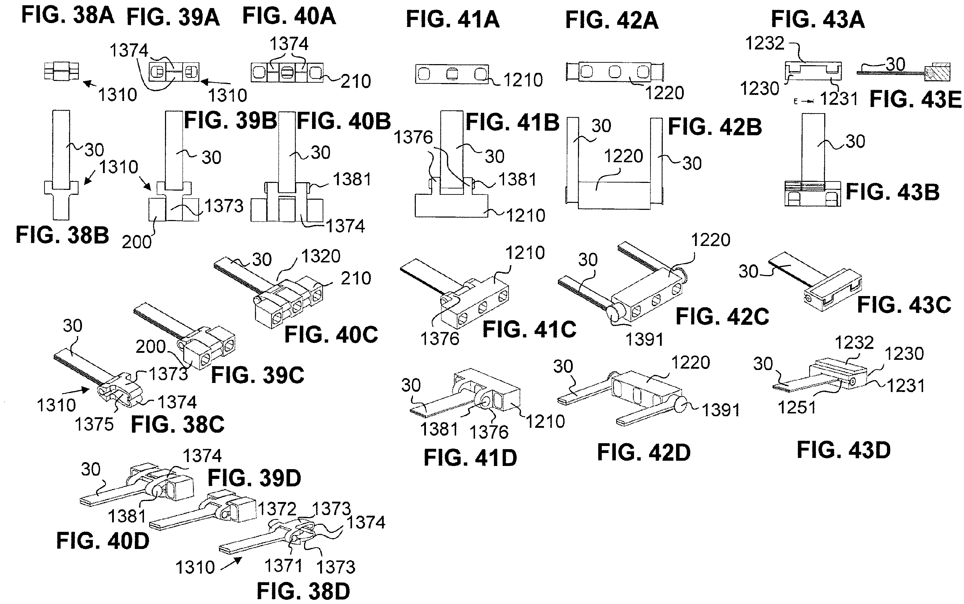

Die Fig. 38A-43E offenbaren Beispiele von Verbindern, die nicht gemäß einem Ausführungsbeispiel der Erfindung sind, wie durch die beigefügten Ansprüche definiert.

Die Fig. 38A zeigt eine Vorderansicht auf einen weiteren Bandverbinder 1310 mit eingelegtem Zugband und Fig. 38B eine Draufsicht auf den Gegenstand aus Fig. 38A. Die Fig. 38C und Fig. 38D zeigen perspektivische Ansichten des Gegenstandes. Der Bandverbinder 1310 umfasst einen Rückhaltezylinder 1371, um den das Zugband 30 gelegt ist. Der Rückhaltezylinder 1371 ragt rechts und links aus der Schlaufenöffnung 31 heraus und wird von zwei C-förmigen Abschnitten 1372 gehalten, die sich an ihren freien Enden mittig oben und unten in jeweils einem zentralen Klemmhalteabschnitt 1373 treffen, die vom Zugband 30 weggerichtet sind und über die nach innen gebogenen freien Enden 1374 einen dazwischen liegenden Halteraum 1375 definieren. Der Bandverbinder 1310 ist also insgesamt ein C-förmiges Teil zwischen den beiden freien Enden 1374, wobei sich mittig das Teil aufgabelt, um seitlich um das Zugband 30 herum, dieses seitlich auf dem einzulegenden Zylinder 1371 zu halten.

Die Fig. 39A zeigt nun eine Vorderansicht auf den Bandverbinder 1310 mit eingelegtem Zugband 30 an einem Verbinder 200 und Fig. 39B eine Draufsicht auf den Gegenstand aus Fig. 39A. Die Fig. 39C und Fig. 39D zeigen perspektivische Ansichten des Gegenstandes. Dabei ist zu erkennen, dass die Klemmhalteabschnitte 1373 um einen in den Zeichnungen nicht weiter dargestellten im Durchmesser geringeren Verbindungssteg zwischen den linken und rechten Aufnahmekörpern herum das Zugband 30 gegenüber dem Verbinder 200 spannen.

Die Fig. 40A zeigt eine Vorderansicht auf einen weiteren Bandverbinder 1320 mit eingelegtem Zugband 30 gegenüber einem Verbinder für drei elastische Seilelemente und Fig. 40B eine Draufsicht auf den Gegenstand aus Fig. 40A. Die Fig. 40C und Fig. 40D zeigen perspektivische Ansichten des Gegenstandes. Hierbei sind auf Verbinderseite drei elastische Seilelemente vorgesehen, so dass es zwei seitliche Klemmhalteabschnitte 1373 gibt, die jeweils Fortsätze der C-förmigen Abschnitte 1372 aufweise. Der Rückhaltezylinder 1371 ragt rechts und links aus der Schlaufenöffnung 31 heraus und weist einen parallel zum Rückhaltezylinder 1371 ausgerichteten zentralen Abschnitt auf. An diesen zentralen Abschnitt grenzen auf beiden Seiten links und rechts zwei mal zwei C-förmige Abschnitte 1372 oben und unten an, die sich an ihren freien Enden mittig in jeweils einem zentralen Klemmhalteabschnitt 1373 treffen, der vom Zugband 30 weggerichtet ist und über die nach innen gebogenen freien Enden 1374 einen dazwischen liegenden Halteraum 1375 definieren. Der Bandverbinder 1320 weist also links und rechts einen Klammerabschnitt auf, zwischen dem die Öffnung für das zentrale der drei Seilelemente vorgesehen ist. Es gabelt sich der Bandverbinder 1320, um das Zugband 30 in Verlängerung des mittleren Seilelementes anzuordnen. Der Zylinder 1381 ist hier mit einer Abdeckung versehen

Die Fig. 41A zeigt eine Vorderansicht auf einen weiteren Verbinder 1210 mit eingelegtem Zugband 30 und Fig. 41B eine Draufsicht auf den Gegenstand aus Fig. 41A. Die Fig. 41C und Fig. 41D zeigen perspektivische Ansichten des Gegenstandes. Der Körper des Verbinders 1210 verfügt auf der dem Zugband 30 zugewandten Seite über zwei Auskragungen 1376 mit zueinander fluchtend quer ausgerichteten Öffnungen zur Aufnahme des Haltezylinders 1381, um den herum das Zugband 30 geführt ist. Der Vorteil dieser Lösung liegt im geringeren Platzbedarf in der Breite für einen Verbinder mit drei Seilelementen 20, da hier das Zugband 30 in Richtung und hinter der Öffnung 203 für das mittlere flexible Seilelement 20 angeordnet ist.

Die Fig. 42A zeigt eine Vorderansicht auf einen weiteren Verbinder 1220 mit eingelegtem Zugband 30 und Fig. 42B eine Draufsicht auf den Gegenstand aus Fig. 42A. Die Fig. 42C und Fig. 42D zeigen perspektivische Ansichten des Gegenstandes. Dieser Verbinder 1220 ist ähnlich zum Verbinder 1210 aus Fig. 41 ausgestaltet, da auch dieser einen Korpus mit näher aneinander liegenden Öffnungen 203 für die Befestigung eines elastischen Elementes 10, wobei hier die Zylinder 1391 mit einem eine Schulter bildenden Abschluss auf gegenüberliegenden Querseiten seitlich angebracht sind. Damit erfordert auf der anderen Seite dieser Verbinder 1220 direkt den Einsatz von zwei Zugbändern 30.

Die Fig. 43A zeigt eine Vorderansicht auf einen weiteren Verbinder 1230 mit eingelegtem Zugband 30 und Fig. 43B eine Draufsicht auf den Gegenstand aus Fig. 43A. Die Fig. 43C und Fig. 43D zeigen perspektivische Ansichten des Gegenstandes und schliesslich zeigt Fig. 43E eine geschnittene Seitenansicht des Gegenstandes aus Fig. 43A. Der Verbinder 1230 besteht aus Unterteil 1231 und Oberteil 1232, welche zusammengesetzt sind, um wie bei Fig. 25 und Fig. 26 für die flexiblen Seilelemente 20 über eine Klemmung durch Schlitze für hier zwei Seilelemente 20 zu gelangen. Auf der Seite des Zugbandes ist ein einzelner seitlicher Schlitz 1251 vorgesehen, um dabei vorab das Zugband 30 um den Zylinder 1361 zu winden und dann diese Einheit in die Aufnahme hinter den Schlitz 1251 zu schieben, so dass bei Einwirken der Kraft in Zugrichtung des Zugbandes 30 das Band effektiv im Bereich hinter der Seilelemente zu halten.

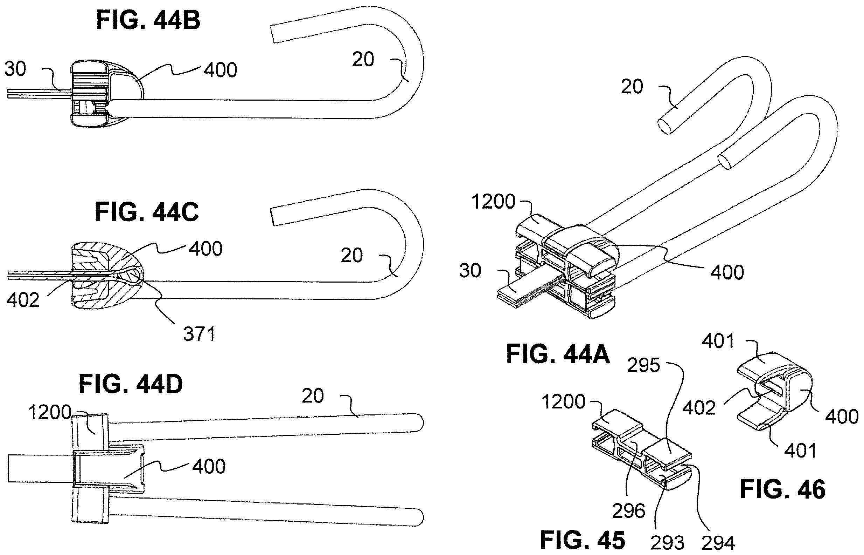

Die Fig. 44A zeigt eine perspektivische Ansicht auf eine teilweise dargestellte Verbindungseinheit mit einem weiteren Verbinder 1200 gemäss einem Ausführungsbeispiel mit eingelegtem Zugband 30 und eingelegtem flexiblen Seilelement 20. Die Fig. 44B zeigt eine Seitenansicht des Verbinders 1200, die Fig. 44C eine geschnittene Seitenansicht des Gegenstandes aus Fig. 44A und die Fig. 44D eine Draufsicht auf den Gegenstand aus Fig. 44A. Der Verbinder 1200 selbst ist in einer perspektivischen Ansicht in Fig. 45 zu sehen und eine Klammer 400 ist in einer perspektivischen Ansicht in Fig. 46 dargestellt. Der Verbinder 1200 ist knochenförmig und hat links und rechts jeweils einen Aufnahmekörper 295 für ein elastisches Element 10 mit einer durchgehenden Öffnung 293 und einem seitlich offenen Schlitz 294 zum Einlegen des elastischen Elementes 10. Die beiden Aufnahmekörper 295 sind über einen einen geringeren Durchmesser aufweisenden Verbindungssteg 296 verbunden, beispielsweise einstückig als Spritzgussstück, so dass sich seitliche Schultern bilden. Bei zwei übereinandergelegten Verbindern 1200 wird in den Zwischenbereich zwischen zwei Verbindungsstegen 296 ein Band 30 gelegt, welches dann durch die Klammer 400 gehalten wird. Die Klammer 400 hat zwei freie Schenkel 401, die sich in einem Klemmschluss um die beiden äusseren Seitenflächen der beiden Verbindungsstege 296 der Verbinder 1200 klemmen. Dabei wird das Band 30 nach der Durchführung durch den von den inneren Seitenflächen der Verbindungsstege 296 begrenzten Durchgang in eine durchgehende Öffnung 402 vorgeschoben und dabei ist der Klammer 400 seitlich auf der in der Fig. 46 abgewandten Seite ein im Querschnitt der Fig. 44C dargestellten Zylinder 371 zugeordnet und befestigt, um den das Zugband 30 geführt ist. Damit wird die Zugkraft direkt vom Zugband 30 auf die C-Klammer 400 und von dort auf die Oberflächen des Körpers des Verbinders 1200 übertragen. Der Verbinder 1200 ist dabei gekrümmt, um bei der Anordnung dem Radius bezüglich dem Zentrums der Sprungmatte zu entsprechen.

Der wesentliche Vorteil des Verbinders 400 nach Fig. 46 und im Einsatz nach den Fig. 44 bis 46 liegt zum einen in der geringen Bauhöhe, also dem geringen vertikalen Abstand zwischen den beiden freien Enden 401, da dazwischen die beiden zu einer Seilschlaufe umgebogenen Seilelemente 20 in den Verbindern 1200 direkt aufeinander liegen und durch die Ausnehmung 296 die Bauhöhe für die Durchführung des Bandes 30 geringstmöglich ist. Vor allem aber, zum anderen, ist die Baulänge, also die Länge in Richtung des Bandes 30 sehr gering, da die Schlaufe um den Zylinder 371 als Blockierstössel "hinter" den Verbindern 1200 liegt, und somit die Abschlüsse der Seilelemente hinter der um den Zylinder 371 herumlaufenden Schlaufe liegen. Es kann auf jeder gegenüberliegenden Seite der Schwungmatte eine Verkürzung der Anlenkung gegenüber anderen Ausführungsbeispielen um ein bis zwei Zentimeter gewonnen werden, so dass bei gleich grossem Rahmen eine grössere Schwungmatte einsetzbar ist.

Das Seilhaken-Modul nach Figs. 44 bis 46 verwendet auf den Seilabschnitt-Enden insbesondere Abschlüsse gemäss Fig. 7. Alternativ können auch Abschlüsse gemäss Fig. 9 oder 10 zur Anwendung kommen. Bei der Montage werden die beiden gegenüber liegenden Abschlüsse eines Seilabschnittes in je einen Verbinder eingehängt. Die Verbinder sind in ihrer Grundform ähnlich den unter Fig. 28 vorgestellten Elementen, wobei es ihnen an der Durchgangsöffnung 252 fehlt. Das komplette Seil-Modul besteht aus zwei Seilabschnitten und zwei Verbindern. Das vormontierte Modul wird mit Hilfe eines Halte-Elementes mit der Matte und dem Trampolin Rahmen verbunden. Das Halte-Element ist mit einer Bandschlaufe so mit der Matte verbunden, wie dies in Fig. 32 dargelegt wird. Bei der Montage wird ein erster Verbinder in das Halte-Element eingelegt. Danach wird das Seilstrang-Paar mit dem zweiten Verbinder um das Rahmenrohr geführt. Abschliessend wird der zweite Verbinder in die noch freie Position des Halte- Elementes eingelegt.

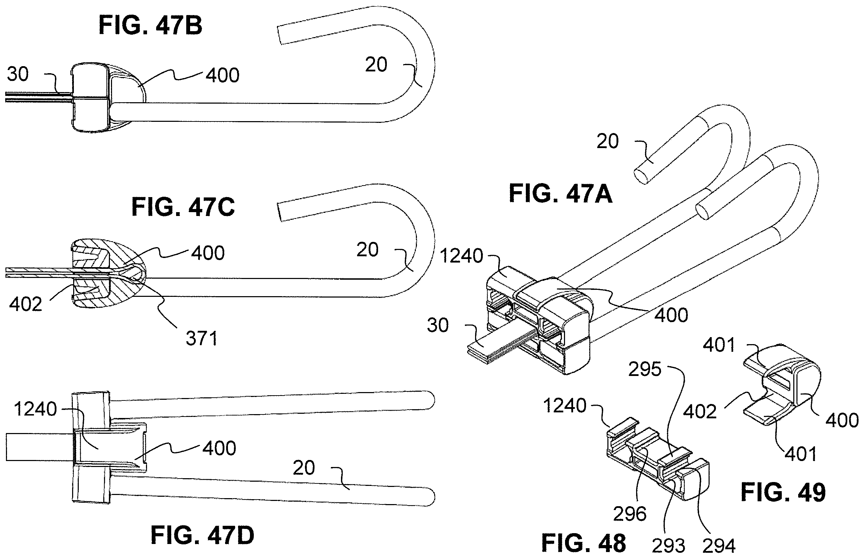

Die Fig. 47A zeigt eine perspektivische Ansicht auf eine teilweise dargestellte weitere Verbindungseinheit mit einem weiteren Verbinder 1240 gemäss einem Ausführungsbeispiel mit eingelegtem Zugband 30 und eingelegtem flexiblen Seilelement 20. Die Fig. 47B zeigt eine Seitenansicht des Verbinders 1240, die Fig. 47C eine geschnittene Seitenansicht des Gegenstandes aus Fig. 47A und die Fig. 47D eine Draufsicht auf den Gegenstand aus Fig. 47A. Der Verbinder 1240 selbst ist in einer perspektivischen Ansicht in Fig. 48 zu sehen und eine dazugehörige Klammer 400 ist in einer perspektivischen Ansicht in Fig. 49 dargestellt. Der Verbinder 1240 ist knochenförmig und hat links und rechts jeweils einen Aufnahmekörper 295 für ein elastisches Element 10 mit einer durchgehenden Öffnung 293 und einem nach oben offenen Schlitz 294 zum Einlegen des elastischen Elementes 10. Die beiden Aufnahmekörper 295 sind über einen einen geringeren Durchmesser aufweisenden Verbindungssteg 296 verbunden, beispielsweise einstückig als Spritzgussstück, so dass sich seitliche Schultern bilden. Bei zwei übereinandergelegten Verbindern 1240 wird in den Zwischenbereich zwischen zwei Verbindungsstegen 296 ein Band 30 gelegt, welches dann durch die Klammer 400 gehalten wird. Die Klammer 400 hat zwei freie Schenkel 401, die sich in einem Klemmschluss um die beiden äusseren Seitenflächen der beiden Verbindungsstege 296 der Verbinder 1240 klemmen. Dabei wird das Band 30 nach der Durchführung durch den von den inneren Seitenflächen der Verbindungsstege 296 begrenzten Durchgang in eine durchgehende Öffnung 402 vorgeschoben und dabei ist der Klammer 400 seitlich auf der in der Fig. 49 abgewandten Seite ein im Querschnitt der Fig. 47C dargestellten Zylinder 371 zugeordnet und befestigt, um den das Zugband 30 geführt ist. Damit wird die Zugkraft direkt vom Zugband 30 auf die C-Klammer 400 und von dort auf die Oberflächen des Körpers des Verbinders 1240 übertragen.

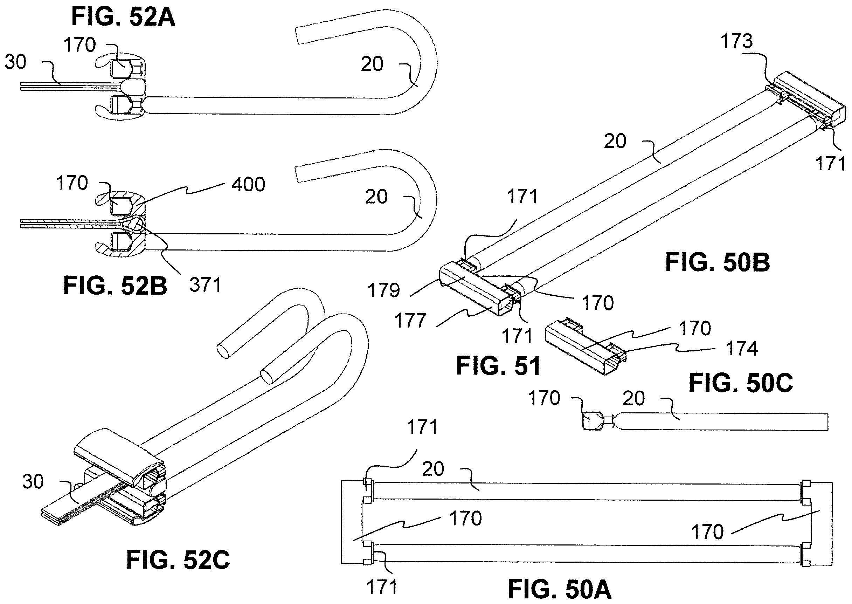

Die Fig. 50A zeigt eine Draufsicht auf eine Verbindungseinheit mit zwei elastischen Elementen 20 mit jeweils einem in die Verbindungseinheit integrierten Abschluss 170 gemäss einem Ausführungsbeispiel der Erfindung. Die Fig. 50B zeigt eine perspektivische Ansicht der Verbindungseinheit nach Fig. 50A, die Fig. 50C eine Teil-Seitenansicht auf einen Ausschnitt der Verbindungseinheit nach Fig. 50A. Die Fig. 51 ist eine perspektivische Ansicht des integrierten Abschlusses 170 der Verbindungseinheit nach Fig. 50A. Die Fig. 52A zeigt eine Seitenansicht auf teilweise dargestellte Verbindungseinheiten nach Fig. 50A mit einem eingelegten Band 30, Fig. 52B eine geschnittene Seitenansicht des Gegenstandes aus Fig. 52A und Fig. 52C eine perspektivische Ansicht des Gegenstandes aus Fig. 52A. Der Abschluss 170 ist hier eine einstückige Klemme mit zwei seitlichen Klemmbereichen 171. Es kann auch für jedes Seilelement 20 eine U-förmigen Sicherungs-Klammer vorgesehen sein wie beim Abschluss 130. Die Klemmbereiche 171 gehen in eine Rückwand 177 über, von der ausgehend sich im Wesentlichen im geschlossenen Zustand parallel erstreckende aussenliegende Seiten 179 ergeben. Von diesen erstreckt sich bis zu den freien Enden der Klemme 171 nach innen zum einzulegenden Seilelement 20 hin gerichtete Klemmnuten 173, die dann wiederum in einem, einem U entsprechenden, freien Ende 174 enden. Das dazwischen eingelegte elastische Band 20 kann geklemmt und verformt werden, wobei ein Rückzug des freien Endes 21 des Bandes 20 aus dem Aufnahmeraum verhindert wird, wenn die Klemme und Abschluss in eine Klammer 400 eingesetzt wird, wie es die Figs. 52A bis 52 C zeigen. Auch hier wird das Band 30 zwischen zwei parallel zueinander angeordneten Verbindern 170, die Abschlüsse sind, angeordnet, durch die Öffnung 402 des Verbinders 400 hindurchgeführt und am Herausrutschen durch den im Querschnitt tropfenförmigen Zylinder 371 verhindert, um den das Band 30 gewunden ist. Das als Metallstanzteil ausgestaltete Abschlussteil 170 kann in einfacher Weise zwei parallel angeordnete Seilelemente 20 halten, insbesondere, wenn das gegenüberliegende Abschlussteil 170 zu einer Schlaufe für die Seilelemente 20 umgelegt ist, so dass diese beiden zugeordneten Abschlussteile 170 in einer Klammer 400 zusammengefasst werden.

In anderen Worten, bei dieser Konfiguration nach Figs. 50 bis 52 werden die beiden Seilabschnitte an ihren Enden mit jeweils einem Doppel-Abschluss verbunden. Diese Brückenteile sind gleichzeitig Abschluss und Verbinder. Die dafür genutzten Elemente sind gestanzte und gebogene Metallband-Teile, bei denen je ein Abschluss-Element gemäss Fig. 7A oder Fig. 9 respektive Fig. 10 die Endzone des Metall-Profils bildet. Das Halte-Element ist mit einer Bandschlaufe so mit der Matte verbunden wie dies im Zusammenhang mit Fig. 32 erläutert wird. Bei der Montage wird ein erster Doppelabschluss/Verbinder in das Halte-Element eingelegt. Danach wird das Seilstrang-Paar mit dem zweiten Doppelabschluss/Verbinder um das Rahmenrohr geführt. Abschliessend wird der zweite Doppelabschluss/Verbinder in die noch freie Position des Halteelementes eingelegt.

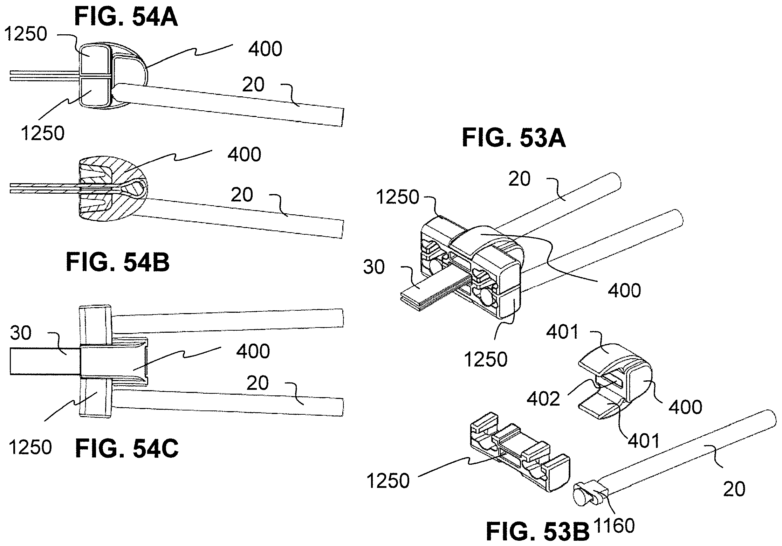

Die Fig. 53A zeigt eine perspektivische Ansicht auf einen teilweise dargestellten weiteren Verbinder 1250 gemäss einem Ausführungsbeispiel und Fig. 53B eine perspektivische Explosionsansicht von drei Teilen des Gegenstandes nach Fig. 53A, Die Fig. 54A zeigt eine Seitenansicht auf eine teilweise dargestellte Verbindungseinheit nach Fig. 53A mit einem eingelegten Band 30; Fig. 54B eine geschnittene Seitenansicht des Gegenstandes aus Fig. 54A und schliesslich Fig. 54C eine Draufsicht auf den Gegenstand aus Fig. 54A. Der Verbinder 1250 ist ähnlich zum Verbinder 1240 ausgestaltet, nur ist dieser zur Aufnahme des Abschlussteils 1160 ausgestaltet. Auch hier wieder werden die Seilelemente 20 mit aufgeklemmten Abschluss 1160 in die seitlichen Öffnungen des Verbinders 1250 gelegt, wobei die gegenüberliegenden anderen freien Enden der Seilelemente mit einem entsprechenden weiteren Abschluss 1160 in den zweiten benachbarten Verbinder 1250 eingesetzt wird. Die beiden Verbinder werden dann mit dem Verbinder 400 zusammengehalten, der sich in den Schulterbereich einklemmt und dabei in dem Bereich zwischen den beiden Verbindern 1250 das Band 30 hindurchführt.

Die Figuren zeigen eine vielfältige Möglichkeit, die Bandverbindung mit einem Trampolin von seiner Sprungmatte zu realisieren. Sie gehen alle von einer symmetrischen Kraftbeaufschlagung auf das Verbindungsteil aus, welche in verschiedenen Ausführungsformen realisiert werden können, die jeweils im Sinne der nun folgenden Ansprüche beansprucht sind.

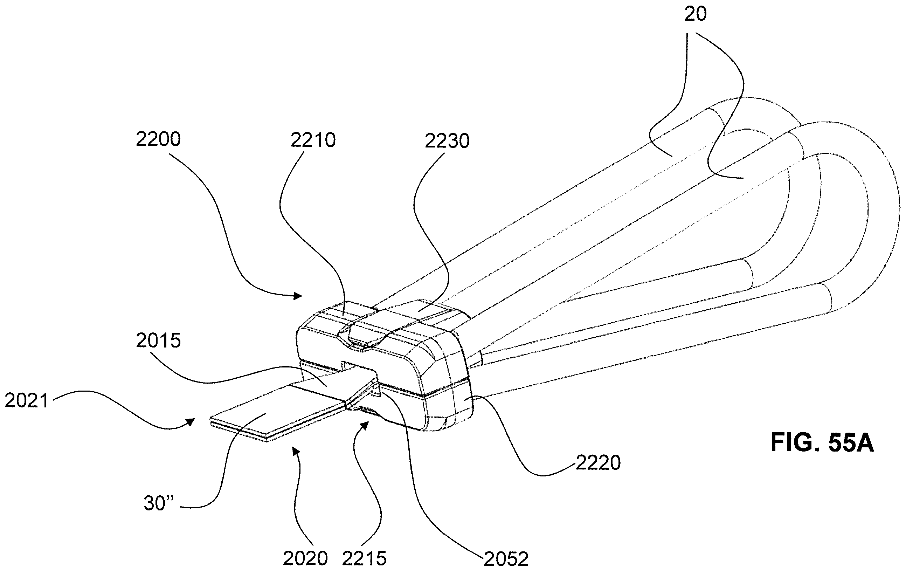

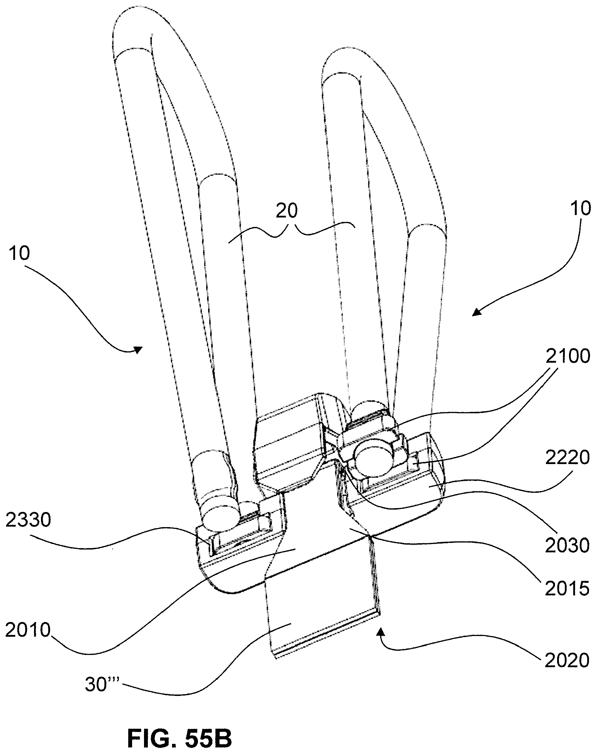

Die Fig. 55A zeigt eine perspektivische Ansicht auf eine kurze mehrteilige Verbindungseinheit als Verbinder 2200 mit zwei nebeneinander angeordneten und zu einer Schlaufe geformten flexiblen Seilelementen 20 und einem in die Verbindungseinheit eingehängten Zugband 30" ähnlich zu dem nach Fig. 35. Die Beschreibung zu dieser und den folgenden Figuren zeigt insbesondere auf, dass ein Zugband 30‴ mit einem geschlauften Einhängebereich 2010 und einem diesem gegenüber breiteren Haltebereich 2020 vielseitig einsetzbar ist und eine Verkürzung der Bandlänge 30‴ ermöglicht, insbesondere einen kürzeren Übergangsbereich bei breiterem Haltebereich 2020. Zwischen dem in dem Verbinder 2200 eingehängten Bereich 2010 und dem Haltebereich 2020 ist der Verbreiterungsbereich 2015 vorgesehen. Die Fig. 55A zeigt eine perspektivische Ansicht auf den Verbinder 2200 gemäss einem Ausführungsbeispiel mit einer zentralen Öffnung 2052, die im hinteren Teil seitliche Aufnahmen für einen Bandverbinder 2030 hat. Der Verbinder 2200 ist dreiteilig mit einem Oberteil 2210, einem Unterteil 2220 und einem diese Teile 2210 und 2220 zusammen klemmenden und verbindenden Clip 2230. Dabei ist der Clip 2230 zwischen den beiden flexiblen Seilelementen 20 angeordnet. Die Fig. 55B zeigt eine perspektivische Ansicht des Verbinders 2200, mit den zwei flexiblen Seilelementen 20, teilweise mit Abschlüssen 2100 versehen. Zur Erleichterung der visuellen Lesbarkeit wurde auf die Darstellung des oberen Abschlusses 2100 beim links dargestellten elastischen Element 10 verzichtet. Dagegen sind die beiden nebeneinander geführten Seilstränge 20, die im Unterteil 2220 eingelegt sind, mit je einem Verbinder 2100 ausgestattet. Dabei sind Ausnehmungen 2330 im Unterteil 2220 zur Aufnahme der Verbinder 2100 mit dem eingeklemmten flexiblen Seilelement 20 erkennbar.

Ein Zugband 30' oder 2030 zur Befestigung an einer Schwungmatte an einem Trampolinrahmen, insbesondere für eine Verwendung mit einem Verbinder oder mit einer Verbindereinheit hat dann nach der vorliegenden Erfindung zwei freie Enden 2021, die aufeinanderliegend angeordnet sind und diesen gegenüberliegend eine Schlaufe 31 in einem Rückhaltebereich 2010 vorgesehen ist, wobei die Schlaufe 31 über ein Rückhalteelement 350, 360, 371 oder 2030 mit dem Verbinder oder mit einer Verbindereinheit und damit indirekt mit dem Trampolinrahmen verbindbar ist, umfassend einen Haltebereich 2020 an den freien Enden zur Befestigung, insbesondere zum Annähen an einer Schwungmatte. Dabei ist dann der Haltebereich 2020 quer zur Längsausdehnung des Zugbandes 30' oder 2030 breiter ist als der Rückhaltebereich 2010, der im oder an dem Verbinder vorgesehen ist, und zwischen Haltebereich 2020 und Rückhaltebereich 2010 ist ein die Breite in der Querdimension anpassender Übergangsbereich 2015 vorgesehen ist. Dabei ist dies vorteilhafterweise ein sich monoton verbreitender Abschnitt, der auch sehr kurz sein kann. Vorteilhafterweise ist er so lang, dass der Verbreiterungswinkel an beiden Seiten nicht grösser als 30 Grad beträgt. Die Länge des Haltebereichts 2020 ist durch die Länge des zu vernähendem Stückes vorgegeben. Vorteilhafterweise verbreitert sich der Rückhaltebereich unmittelbar nach dem Verbinder und der Übergangsbereich endet an der Kante von der Schwungmatte.

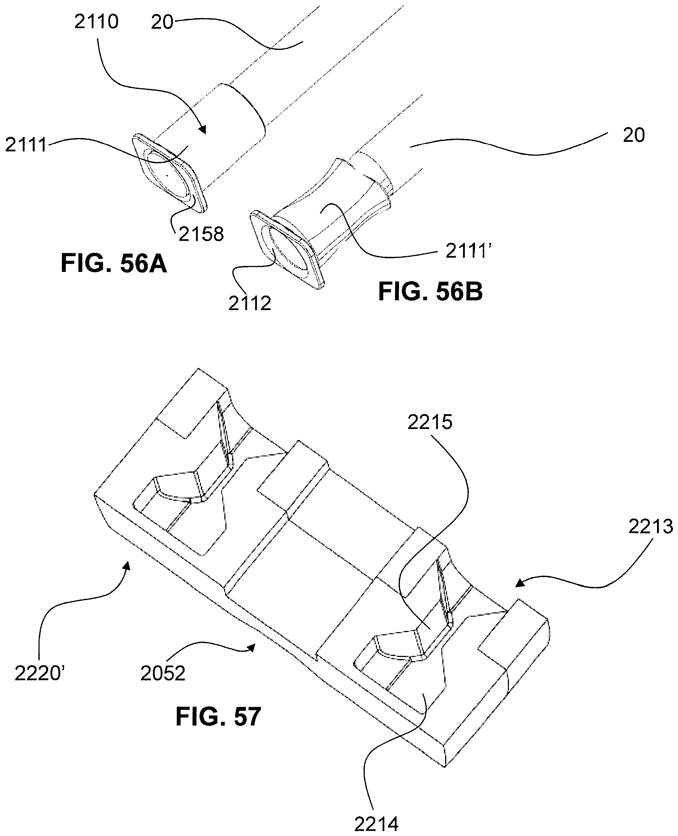

Die Fig. 56A zeigt eine perspektivische Ansicht eines weiteren Abschlusses 2110 gemäss einem Ausführungsbeispiel der Erfindung im offenen Zustand auf einem flexiblen Seilelement 20. Der Abschlusses 2110 hat eine Hülse 2111 und einen Flansch 2158 an einem freien Ende der Hülse 2111. Der Flansch entspricht funktionell den überstehenden Rippen 1128 etc.. Er kann auch wie der Abschluss 2100 verwendet werden. Die Fig. 56B zeigt eine perspektivische Ansicht des Abschlusses 2110 nach Fig. 56A im geschlossenen Zustand an und mit einem flexiblen Seilelement 20. Dabei ist die Hülse 2111 gequetscht und hält das flexible Seilelement 20 fest, wie es im Zusammenhang mit der Fig. 57 erläutert werden wird. Zuerst wird noch erwähnt, dass der Flansch 2158 innen offen ist und eine Öffnung 2112 hat. Der Flansch 2158 kann jedoch als Platte voll ausgestaltet sein und somit die Hülse 2111 zu einem Sackloch verschliessen, gegen dessen inneres Ende das flexible Seilelement 20 vorgeschoben werden kann. Der Flansch 2158 kann auch in Längsrichtung der Hülse 2111 breiter ausgestaltet sein, wobei er beispielsweise die Form des Abschlusses 2100 annehmen kann.

Die Fig. 57 zeigt nun eine perspektivische Ansicht auf ein Unterteil 2220` einer längeren Verbindungseinheit als die aus Fig. 55B mit Öffnungen 2213 zum Einlegen von Abschlüssen von Seilelementen 20. Die zentrale Öffnung 2052 - ähnlich wie die Öffnung 202 etc. - ist dafür vorgesehen, den schmalen Einhängebereich 2010 aufzunehmen, um diesen (nicht dargestellt) in dem Unterteil, dem Oberteil oder dem Clip zu verankern. Anschliessend an den schmalen Einhängebereich 2010 kann dann direkt der Übergangsbereich 2015 anschliessen, um mit einem breiteren Haltebereich das Zugband 30‴ an der Sprungmatte zu befestigen, insbesondere anzunähen. Damit kann die Breite der Verbinder 200, 210,... bis zu den hier vorgestellten 2200 etc. vermindert werden, da die Kraftaufnahme an den Bandverbindern 330 bis 2030 leichter auf die Verbinder zu übertragen ist, als die Zugkräfte auf den Nähten an dem Haltebereich 2020. Die seitlichen Öffnungen 203 bis 2213 können somit näher zueinander angeordnet werden.

Die Öffnung 2213 ist als Sackloch ausgestaltet, obwohl das nicht notwendig ist. Dabei besteht in der Tiefe der Öffnung ein Hohlraum 2214, der sich im nicht dargestellten Oberteil entsprechend fortsetzt, an den sich zur Öffnung hin eine Verengung 2215 anschliesst, in die die gequetschte Hülse 2111' zu liegen kommt, während der Flansch 2158 im Hohlraum 2214 verbleibt. Damit wird der Abschluss 2110 zum einen durch den Flansch 2158 gehalten, der nicht durch die Verengung 2215 hinausgezogen werden kann und andererseits verhindert die Verengung 2215 ein erneutes Wiederaufspreizen der Hülse 2111' bei einer Zugkraftausübung auf das flexible Seilelement 20.

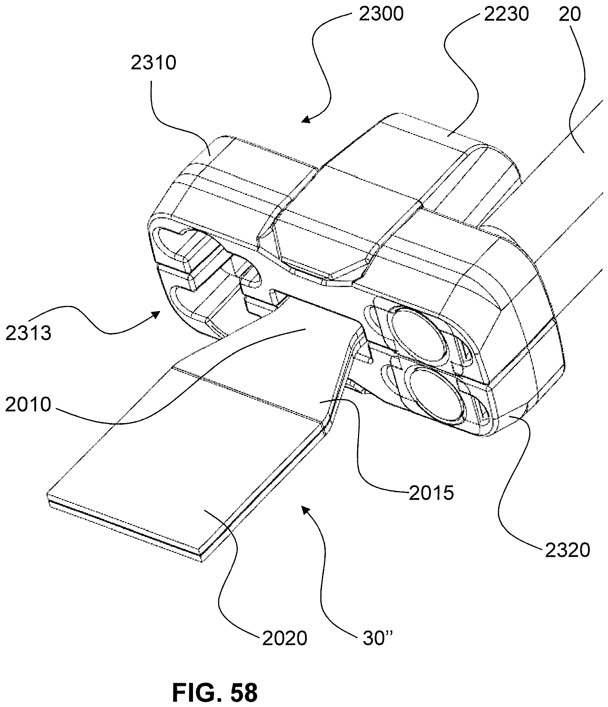

Die Fig. 58 zeigt eine perspektivische Ansicht auf eine weitere Verbindungseinheit 2300 mit einem zu einer Schlaufe geformten elastischen Element 10 mit einem flexiblen Seilelement 10 und Abschlüssen mit seitlich überstehenden Rippen 1128 bis 1178. und einem in die Verbindungseinheit eingehängten Zugband ähnlich zu dem nach Fig. 35. Dabei besteht auch hier ein Unterteil 2320 und ein ähnliches Oberteil 2310, welche von einem Clip 220 zusammengehalten werden. Insgesamt vier Öffnungen 2313 sind vorgesehen, um die beiden elastischen Elemente 10 mit den Abschlüssen an den freien Enden einhaken zu können. Es ist insbesondere zu beachten, dass die Breite des Haltebereichs 2020 des Zugbandes 30" so breit ist, dass sie seitlich über die inneren Abschnitte der Öffnungen 2313 überstehen.

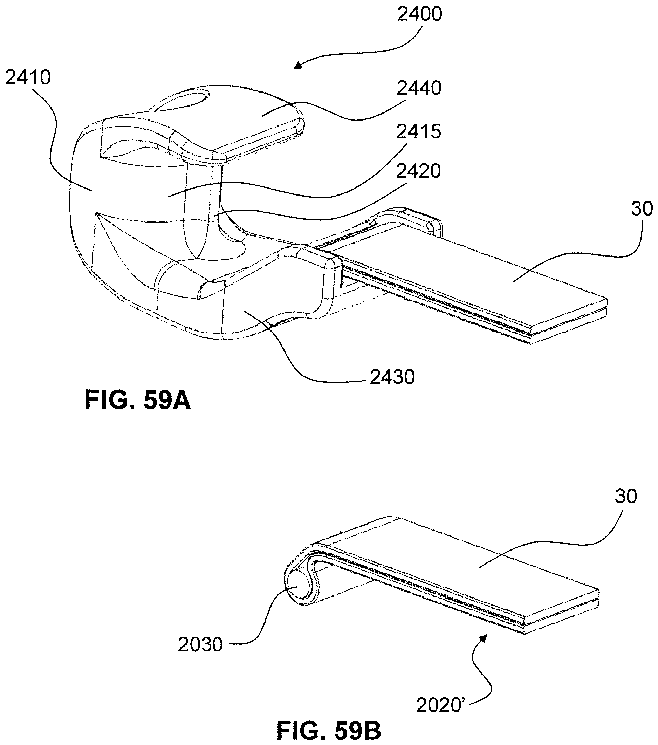

Die Fig. 59A zeigt eine perspektivische Ansicht auf eine weitere Verbindungseinheit 2400 nach einem Beispiel nicht gemäss einem Ausführungsbeispiel der Erfindung für ein oder zwei zu einer geschlossen Schlaufe geformten elastischen Elementen mit einem eingelegten Zugband 30 ähnlich zu dem nach Fig. 34. Die Fig. 59B zeigt dann eine perspektivische Ansicht auf das Zugband 30 nach Fig. 59A mit einem Rückhaltestab 2030, der in die Verbindungseinheit 2400 eingehakt ist. Der Haltebereich 2020' dieses Haltebandes 30 ist nicht breiter als der Einhängebereich 2010. Aber auch hier kann der Haltebereich 2020' dieses Haltebandes 30 verbreitert sein wie das Halteband 30` in Fig. 35 oder die in Fig. 55 und 58 dargestellten Haltebänder 30". Dann kann sich der Haltebereich 2020' über die seitlichen Dimensionen der Verbindungseinheit 2400 erstrecken. Die Verbindungseinheit 2400 hat einen rückwärtigen Körper 2410 in Bezug auf die Anordnung der Matte in Richtung des Haltebandes 30. Dieser Körper 2410 wird nach oben durch eine Abdeckfläche 2440 und nach unten durch einen Zugbandbefestigungsbereich 2430 eingeschränkt, so dass ein auf der gerundeten inneren Haltefläche 2415 anliegendes Band, insbesondere ein Torus-förmiges Band anliegen kann und mit dem Aussenbereich eines Tampolinrahmens verbunden sein kann. Üblicherweise werden dabei flexible Seilelemente 20 verwendet, an denen keine Abschlüsse an den freien Enden befestigt werden, sondern die beiden freien Enden werden durch eine Klammer zusammengequetscht. Dann ist er vorteilhaft dieses Ende mit der Klammer auf einer mittigen Nase 2420 abzusetzen, so dass ein Verschieben der flexiblen Seilelemente 20 entlang ihrer longitudinalen Ausrichtung nicht mehr möglich ist. Dabei helfen auch die gegenüberliegenden Abdeckfläche 2440 und Zugbandbefestigungsbereich 2430 mit. Letzterer kann insbesondere in Bezug auf die obere Abdeckfläche 2440 ansteigend sein, wobei im unteren Bereich Ausnehmungen zum Einsetzen vom Stab 2030 bestehen, um das Zugband in der eingesetzten Stellung zu fixieren. Bei kurzem Zugband nimmt dann im wesentlichen der Übergangsbereich die Zugkräfte auf und verteilt sie zwischen Haltebereich und Einhängebereich. Damit wird aufgezeigt, dass das verbreiterte Band 30" in allen Ausführungen auch bei anderen Arten von elastischen Elementen, insbesondere als Ring vorliegende elastische Elemente eingesetzt werden kann.

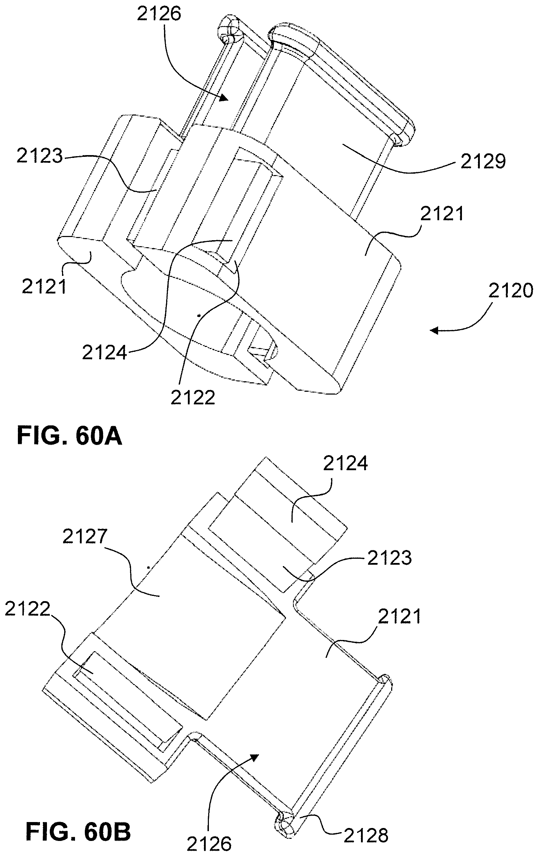

Die Fig. 60A zeigt eine perspektivische Ansicht eines zweiteiligen Abschlusses 2120 gemäss einem Ausführungsbeispiel der Erfindung; und die Fig. 60B zeigt eine perspektivische Ansicht eines der beiden identischen Abschlussteile 2121 nach Fig. 60A. Die beiden Abschlussteile 2121 sind identisch und weisen eine seitliche Öffnung 2122 in Longitudinalrichtung und eine komplementäre Seitenwand 2123 mit einem durch die seitliche Öffnung 2122 in einen Eingriff bringbaren Haken 2124. Die beiden Seitenwände 2123 begrenzen einen durch eine Schräge 2127 gebildeten Aufnahmeraum für das flexible Seilelement 20, der sich zu einem durch zwei parallele Wände gekennzeichneten Hohlraum 2126 für einen gequetschten Bereich des flexiblen Seilelementes 20 verengt, die durch die beiden Haken 2124 in einem vorbestimmten Klemmabstand gehalten werden. An dessen Ende ist eine nach aussen voneinander weg weisende abgerundete Kante 2128 an beiden freien Enden der Abschlussteile 2121 vorgesehen, um bei Bewegungen des flexiblen Seilelementes 20 an dem Abschluss 2120 dieses nicht zu beschädigen. Die voneinander weg weisenden Kanten 2128 begrenzen auch eine flache Aussenseite 2129 des Abschlussteiles 2121 in Richtung des Einlegens des Seilelementes 20. Damit kann um diese beiden Aussenseiten 2129 ein Halteelement wie ein Gummiring, ein Metallring eingesetzt werden, der den Abstand des Hohlraumes 216 unter Spannung hält. Ein Beispiel eines solchen Ringes wird bei Fig.

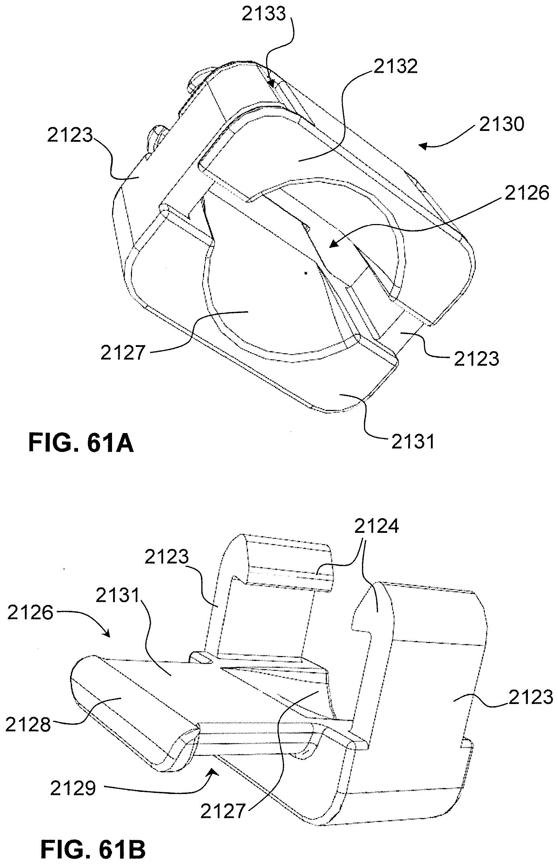

Die Fig. 61A zeigt eine perspektivische Ansicht eines zweiteiligen Abschlusses 2130 gemäss einem weiteren Ausführungsbeispiel der Erfindung und die Fig. 61B zeigt eine perspektivische Ansicht des unteren Abschlussteiles 2131 nach Fig. 61A mit zwei gegenüberliegenden Klemmhaken 2124. Gleiche Merkmale wie bei Fig. 60A/B sind mit den gleichen Bezugszeichen gekennzeichnet. Die Seitenwände 2123 liegen hier an dem Unterteil 2131 einander gegenüber und die Klemmhaken 2124 an den freien Enden der Seitenwände 2123 sind aufeinander zugerichtet und greifen in gegenüberliegende Ausnehmungen 2133 an dem Oberteil 2132 ein, womit wie bei Fig. 60A/B die horizontalen ausgerichteten freien Enden in Längsrichtung des flexiblen Seilelementes 20 ein dazwischen eingelegtes flexibles Seilelement 20 sicher klemmen.

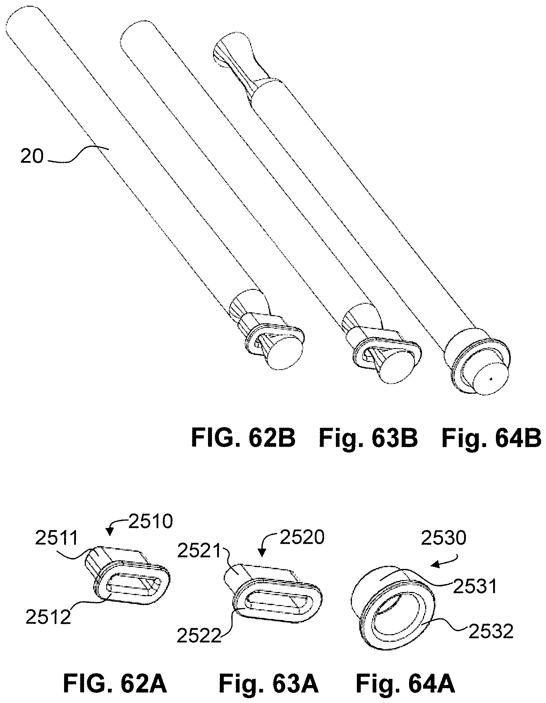

Die Fig. 62A bis Fig. 67B zeigen Abschlüsse, die ähnlich zu den Abschlüssen 1110 bis 1170 der Fig. 11A bis Fig. 17C sind und gleichartig eingesetzt werden können in Verbindern mit einer entsprechenden Aufnahme. Die Fig. 62A zeigt eine perspektivische Ansicht eines weiteren solchen Abschlusses 2510 im geschlossenen Zustand. Dieser Abschluss 2510 weist eine Hülse 2511 auf, die sich an einen frontalen Flansch anschliesst. Insofern ähnelt diese Ausführung derjenigen der Fig. 14A mit dem Proviso, dass es einen gegenüber der Hülse 2511 schmalen auch hülsenförmigen Flansch gibt, der in entsprechende Ausnehmungen eines Verbinders eingreifen kann, um ein Zurückziehen des flexiblen Seilelementes zu vermeiden. Die Fig. 62B zeigt eine perspektivische Ansicht des Abschlusses 2510 nach Fig. 62A im geschlossenen Zustand an und mit einem flexiblen Seilelement 20.

Die Fig. 63A zeigt eine perspektivische Ansicht eines weiteren Abschlusses 2520 im geschlossenen Zustand mit gegenüber der Ausführung Fig. 62A/B seitlich weitere überstehenden Bereichen; die Fig. 63B zeigt eine perspektivische Ansicht des Abschlusses 2520 nach Fig. 63A im geschlossenen Zustand an und mit einem flexiblen Seilelement 20; Ansonsten ist auch hier eine im Aussendurchmesser dünnere Hülse 2521 an einen Flansch 2522 mit grösserem Aussendurchmesser aber gleichem Innendurchmesser wie der Hülse 2521 angeschlossen, welche sich durch Quetschung aus einer hohlzylindrischen Form zu der Form nach Fig. 63A und Fig. 63B verformen.

Die Fig. 64A zeigt eine perspektivische Ansicht des Abschlusses 2530 nach Fig. 63A im offenen Zustand; die Fig. 64B zeigt eine perspektivische Ansicht des Abschlusses 2530 nach Fig. 64A im offenen Zustand an und mit einem flexiblen Seilelement. Dabei weist der Abschluss 2530 eine zylindrische Hülse 2531 und einen entsprechenden daran anschliessenden Flansch 2532 auf, die lose auf das flexible Seilelement 20 aufgeschoben werden können. Nach Quetschung von gegenüberliegenden Seiten, wird die Querschnittsöffnung zu einem Oval mit mehr oder weniger ausgeprägten seitlich überstehenden Rändern, die zudem mit dem Flanschbereich eine Sicherheit gegen Zug auf den Abschluss 2530 sicherstellen.

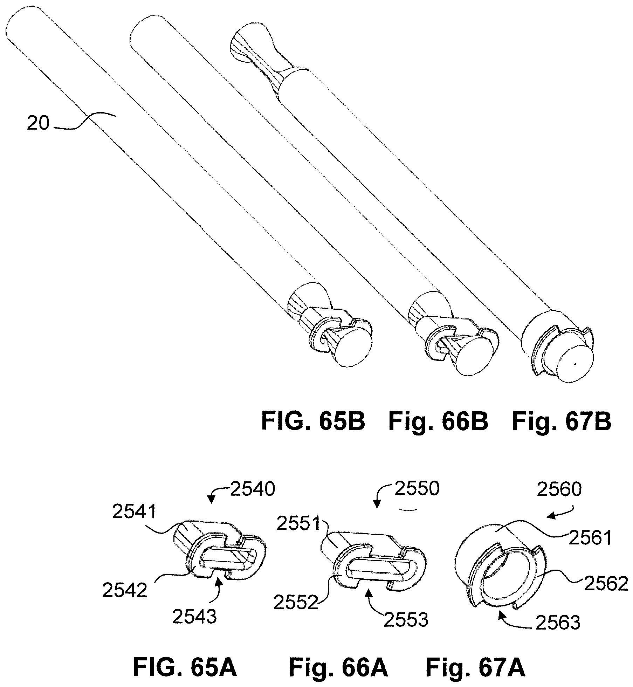

Die Fig. 65A zeigt eine perspektivische Ansicht eines weiteren Abschlusses 2540 ähnlich zu dem Abschluss 2510 nach Fig. 62A/B mit unterbrochenem Flansch 2542 im geschlossenen Zustand; die Fig. 65B zeigt eine perspektivische Ansicht des Abschlusses 2540 nach Fig. 65A im geschlossenen Zustand an und mit einem flexiblen Seilelement 20. Dabei befinden sich an den abgeflachten Stellen der Hülse 2541 zwei gegenüberliegende Unterbrechungen 2543 im Flansch 2542.

Die Fig. 66A zeigt eine perspektivische Ansicht eines weiteren Abschlusses 2550 ähnlich zu dem Abschluss 2520 nach Fig. 63A/B mit unterbrochenem Flansch 2552 im geschlossenen Zustand und mit gegenüber der Ausführung nach Fig. 65A/B seitlich überstehenden Bereichen. Dabei befinden sich an den abgeflachten Stellen der Hülse 2551 zwei gegenüberliegende Unterbrechungen 2553 im Flansch 2552. Die Fig. 66B zeigt eine perspektivische Ansicht des Abschlusses 2550 nach Fig. 66A im geschlossenen Zustand an und mit einem flexiblen Seilelement 20.

Die Fig. 67A zeigt eine perspektivische Ansicht des Abschlusses 2560 nach Fig. 66A im offenen Zustand; und die Fig. 67B zeigt eine perspektivische Ansicht des Abschlusses 2560 nach Fig. 67A im offenen Zustand an und mit einem flexiblen Seilelement 20. Dabei weist der Abschluss 2560 eine zylindrische Hülse 2561 und einen entsprechenden daran anschliessenden Flansch 2562 auf, die lose auf das flexible Seilelement 20 aufgeschoben werden können. Nach Quetschung von gegenüberliegenden Seiten, die an der Seite der gegenüberliegenden Durchbrüche 2563 im Flansch 2560 angesetzt werden, wird die Querschnittsöffnung zu einem Oval mit mehr oder weniger ausgeprägten seitlich überstehenden Rändern verformt, die zudem mit dem Flanschbereich eine Sicherheit gegen Zug auf den Abschluss 2560 sicherstellen.

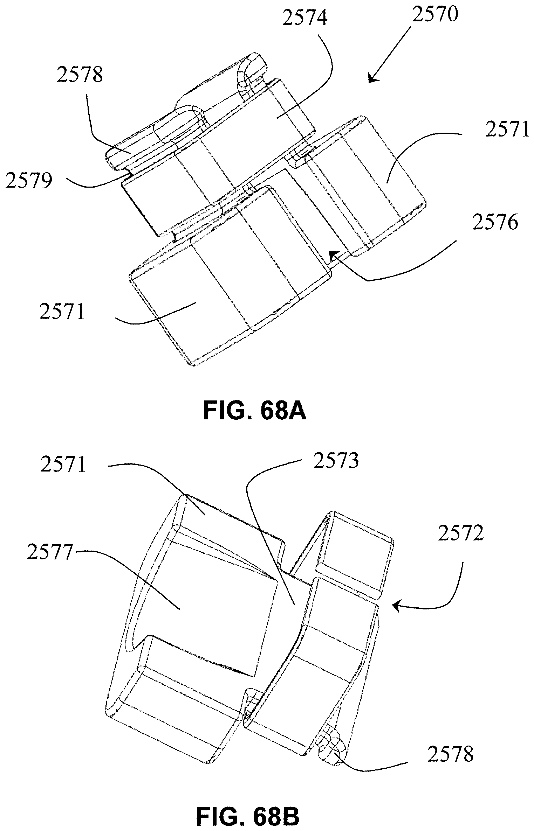

Die Fig. 68A zeigt eine perspektivische Ansicht eines weiteren zweiteiligen Abschlusses 2570 mit einem zusätzlichen fixierenden Metallring 2574 und Fig. 68B zeigt eine perspektivische Ansicht des unteren Abschlussteils 2571 nach Fig. 68A mit dem Metallring 2574. Die beiden Abschlussteile 2571 sind identisch. Die beiden gegenüberliegenden Seiten 2573 begrenzen zusammen mit einer Schräge 2577 gebildeten Aufnahmeraum für das flexible Seilelement 20, der sich zu einem durch die zwei parallelen Wände 2571 gekennzeichneten Hohlraum 2576 für einen gequetschten Bereich des flexiblen Seilelementes 20 verengt. Dabei wird der Hohlraum 2576 durch den Metallring 2574 in einem vorbestimmten Klemmabstand gehalten. Dabei wird der Metallring 2574 in Längsrichtung des flexiblen Seilelementes durch die nach aussen voneinander weg weisende abgerundete Kante 2578 gehalten, die an beiden freien Enden der Abschlussteile 2571 vorgesehen ist, auch um bei Bewegungen des flexiblen Seilelementes 20 an dem Abschluss 2570 dieses nicht zu beschädigen. Der Metallring 2574 ist im Querschnitt, also in Längsrichtung des einzuführenden Seilelementes 20 gesehen, im wesentlichen quadratisch oder gegebenenfalls rechteckig, hat also vier im wesentlichen plane Flächen und vier abgerundete Ecken, wobei an der einen Seite, hier gegenüber der Rückseite des einen Abschlussteils 2571 angeordnet, ein Schlitz 2572 vorgesehen ist, so dass der Metallring 2574 mit einer Vorspannung um die beiden Abschlussteile 2571 herumgelegt werden kann. Die Seitenteile des Metallringes 2574 können auch gebogen sein, die Seitenteile, die auf der Fläche

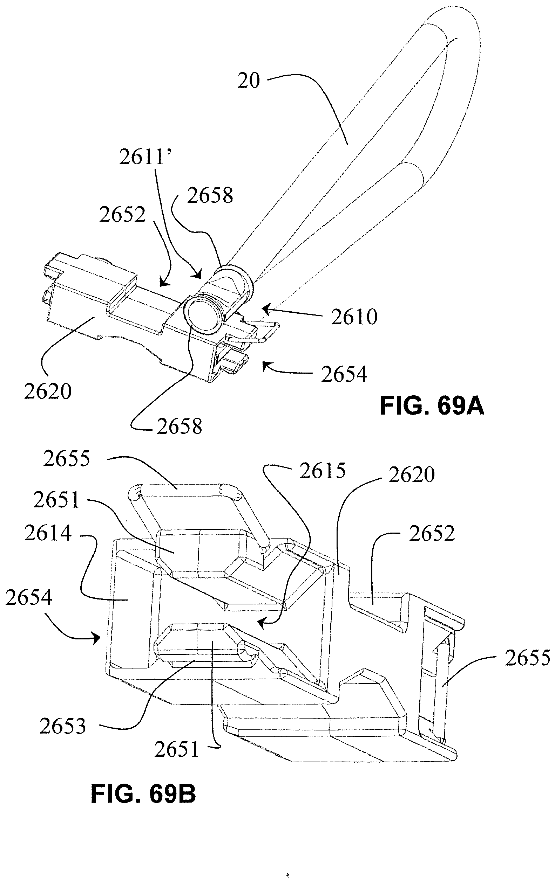

Fig. 69A zeigt eine perspektivische Ansicht auf ein Unterteil 2620 einer weiteren Verbindungseinheit mit einem zu einer Schlaufe geformten elastischen Element 20 und einem in die Verbindungseinheit seitlich eingeführten Abschluss 2610 des elastischen Elementes 20 mit Bügelverschluss. Die Fig. 69B dazu zeigt eine perspektivische Ansicht schräg von hinten unten auf die Verbindungseinheit nach Fig. 69A ohne eingelegten Abschluss 2610. Die zentrale Öffnung 2652 - ähnlich wie die Öffnung 202 etc. - ist dafür vorgesehen, den schmalen Einhängebereich 2010 aufzunehmen, um diesen (nicht dargestellt) in dem Unterteil, dem Oberteil oder dem Clip zu verankern. Anschliessend an den schmalen Einhängebereich 2010 kann dann direkt der Übergangsbereich 2015 anschliessen, um mit einem breiteren Haltebereich das Zugband 30' an der Sprungmatte zu befestigen, insbesondere anzunähen. Die seitliche Öffnung 2654 ist als Sackloch ausgestaltet, obwohl das nicht notwendig ist. Dabei besteht in der Öffnung ein Seilelement ferner Hohlraum 2614, an den sich zum Seilelement hin eine Verengung 2615 anschliesst, in die die gequetschte Hülse 2611' zu liegen kommt, während der Flansch 2658 im Hohlraum 2614 verbleibt. Der Abschluss 2610 hat noch auf der gegenüberliegenden Seite einen weiteren Flansch 2658, der in der Seilelement nahen Öffnung zu liegen kommt. Damit wird der Abschluss 2610 zum einen durch den vorderen Flansch 2658 gehalten, der nicht durch die Verengung 2615 hinausgezogen werden kann und andererseits verhindert die Verengung 2615 ein erneutes Wiederaufspreizen der Hülse 2611' bei einer Zugkraftausübung auf das flexible Seilelement 20. Die Verengung 2615 besteht aus zwei gegenüberliegenden Wänden, die an ihren äusseren freien Enden Nasen 2651 bilden. Dabei sind in zwei seitlichen Bohrungen in einer Nase 2651 die freien Enden eines C-förmigen Bügels 2655 eingesetzt, der beim Schliessen über die andere Nase 2651 in eine dort vorgesehene Rastvertiefung 2653 einrasten kann. Damit wird der Abschluss 2610 auch gegen ein seitliches Herausrutschen gesichert.

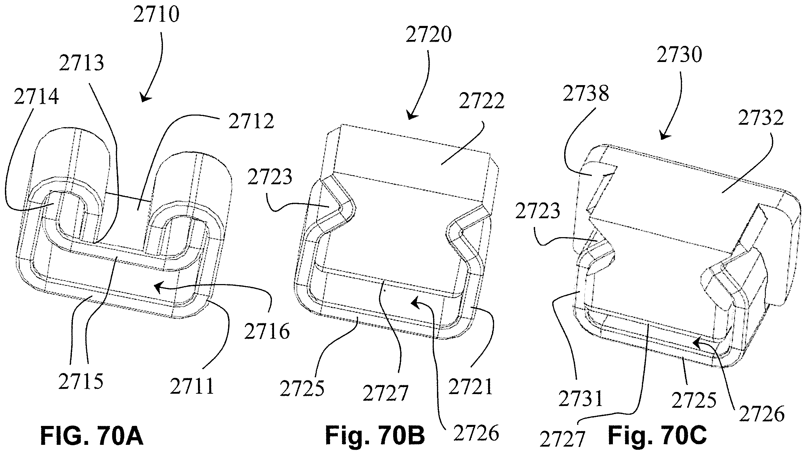

Die Fig. 70A zeigt eine perspektivische Ansicht eines weiteren zweiteiligen Abschlusses 2710 aus zwei Metallteilen 2711 und 2712. Dieser Abschluss 2710 umfasst einen äusseren umfassenden Klemmaussenkörper 2711 auf, der in der Draufsicht die Form eines U mit abgeflachten unteren und seitlichen Wänden hat, wobei die freien Enden 2713 auf sich selbst zurückgebogen sind, so dass sich wiederum kleine U-Formen ausbilden. Zwischen diesen kommen die freien Enden 2714 des Klemminnenkörpers 2712 zu liegen, der also ebenfalls in der Vorderansicht wie ein U aussieht. Dadurch bildet sich zwischen den beiden Bodenplatten 2715 der Metallteile 2711 und 2712 ein Hohlraum 2716 zur Aufnahme des flexiblen Seilelementes 20, wobei dieses dann in diesem Hohlraum 2716 zusammendrückt und damit geklemmt wird.

Die Fig. 70B zeigt eine perspektivische Ansicht eines weiteren zweiteiligen Abschlusses 2720 aus einem Metallteil 2721 und einem zentralen, insbesondere plastischen Kunststoffteil 2722, welches ein Vollmaterialteil ist und einen Klemminnenkörper bildet, welches in einem Formschluss zwischen den Einbuchtungen 2723 eingesetzt ist. Dabei entsteht zwischen der Bodenplatte 2725 des Metallteils 2721 und der Unterseite 2727 des Kunststoffteils 2722 ein Hohlraum 2726 zur Aufnahme des flexiblen Seilelementes 20, wobei dieses dann in diesem Hohlraum 2726 zusammendrückt und damit geklemmt wird.

Die Fig. 70C zeigt eine perspektivische Ansicht eines weiteren zweiteiligen Abschlusses 2730 aus einem Metallteil 2731 und einem zentralen Kunststoffteil 2732 mit einem Flansch 2738. Das Kunststoffteil 2732 ist ein Vollmaterialteil und bildet den Klemminnenkörper, welcher in einem Formschluss zwischen den Einbuchtungen 2723 wie bei Fug, 70B eingesetzt ist. Dabei entsteht zwischen der Bodenplatte 2725 des Metallteils 2731 und der Unterseite 2727 des Kunststoffteils 2732 ein Hohlraum 2726 zur Aufnahme des flexiblen Seilelementes 20, wobei dieses dann in diesem Hohlraum 2726 zusammendrückt und damit geklemmt wird.

**BEZUGSZEICHENLISTE**

| | | | |
|---|---|---|---|
| 10 | elastisches Element | 121 | Klemmfläche |
| 11 | freies Ende | 121' | komplementäre Klemmnut |
| 15, 15', 15" | Verbindungseinheit | 131, 141, 151, 161, 171 | Klemme |
| 20 | flexibles Seilelement | | |
| 21, 22 | freies Ende | 132, 142, 152 | Klammer |
| 30, 30', 30‴ | Zugband | | |
| | | 133, 143, 153, 163, 173 | zum Band hingerichtete Klemmnut |
| 31 | Schlaufenöffnung | | |
| 100, 110, 120, 130, 140, 150, 160, 170, 2100, 2110, 2120, 2130 | | | |
| | Abschluss | 134, 144, 154, 164, 174 | U-förmiges freies Ende |
| 101 | Klemmkörper | 135, 145, 155, 165 | aufeinander zuzubiegendes freies Ende Rückwand |
| 102 | innenliegende Klemmfläche | | |
| 103, 123, 133 | Aufnahmeraum | | |
| 107, 127, 137, 147, 157, 167, 177 | Rückwand | | |
| | | 148 | überstehender Flansch |
| 108, 128 | Vorderseite | 162 | Klammernase |
| 109, 139, 149 | aussenliegende Seite | 200,210,220,230,240, 250, 260, 270, 280, 290, 1210, 1220, 1230, 1240, 1250, 2200, 2300, 2400 | |
| 112 | gezähnte Klemmfläche | | |
| | Verbinder / Verbindungselement | 1139 | überstehende Rippe |
| | | | bogenförmiger Fortsatz |
| 201, 202, 211, 212, 251, 252, 1251, 2052, 2652 | Öffnung | 1149, 1169, 1179 | rückseitige Oberseite |
| | | 1171 | Klemmseitenkörper |
| 203, 213, 253, 263, 273, 293, 2213, 2313 | Öffnung | 1177 | Seitenwand |
| | | 1372 | C-förmiger Abschnitt |
| 222 | seitliche Nut | 1373 | Klemmhalteabschnitt |
| 231,241, 1231 | Unterteil | 1374 | freies Ende |
| | | 1375 | Halteraum |
| 232, 242, 1232 | Oberteil | 1376 | Auskragung |
| | | 2010 | Einhängebereich |
| 233, 2330 | Aufnahmeraum | 2015 | Verbreiterungsbereich / Übergangsbereich |
| 234, 244 | hervorstehende Rippe | | |
| 235, 245 | Klemmrippe | 2020, 2020` | Haltebereich |
| 236, 246 | Öffnung | | |
| 249 | Verriegelungslasche | 2021 | freies Ende |
| | 254,264,274,294,2654 seitliche/untere Öffnung | 2111 | Hülse |
| | | 2111', 261 | 1' gequetschte Hülse |
| 295 | Aufnahmekörper | | |
| 296 | Verbindungssteg | 2112 | innere Öffnung |
| 330, 340, 2030 | 350, 360, 370, 1310, 1320, Bandverbinder | 2121, 2131, 2571 | Unterteil |
| | | 2122 | seitliche Öffnung |
| 331 | Zugband | 2123 | Seitenwand |
| 332 | Schnalle | 2124 | Haken |
| 351 | seitlicher Flansch | 2126, 2576 | Hohlraum |
| 361 | Schlitz-Oberfläche | 2127, 2577 | Schräge |
| 371, 1371, 1381, 1391 | Zylinder | 2128, 2578 | gerundete Kante |
| | | 2129, 2579 | Aussenseite |
| 372 | Verbindungssteg | 2132 | Oberteil |
| 400 | Klammer | 2133 | Ausnehmung |
| 1110, 1120, 1130, 1140, 1150, 1160, 1170, 2510, 2520, 2530, 2540 2550,2560,2570,2610, 2710, 2720, 2730 | Abschluss | 2158, 2658 | Flansch |
| | | 2210, 2310 | Oberteil |
| | | 2215, 2615 | Verengung |
| | | 2220, 2220`, 2320, 2620 | Unterteil |
| 1111,1121,1131 | Klemminnenkörper | | |
| | | 2230 | Clip |
| 1128, 1148, 1158, 1168, 1178 | | 2410 | Körper |
| 2415 | gerundete Haltefläche | 2651 | Nase |
| 2420 | mittige Haltenase | 2653 | Rastvertiefung |
| 2430 | Zugbandbefestigungsbereich | 2655 | Bügel |
| 2440 | Abdeckfläche | 2711,2712,2721 | Metallteil |
| 2511, 2521, 2531, 2541, 2551, 2561 | Hülse | | |
| | | 2713 | freies Ende |
| 2512, 2522, 2532, 2542, 2552, 2562 | Flansch | 2715, 2725 | Bodenplatte |
| | | 2716 | Hohlraum |
| 2543, 2553, 2563 | Flanschunterbruch | 2722, 2732 | Kunststoffteil |
| | | 2723 | Einbuchtung |
| 2572 | Schlitz im Metallring | 2727 | Unterseite |
| 2573 | Innenseite | 2738 | Flansch |
| 2574 | Metallring | | |

## Patentansprüche

1. Verfahren zur Befestigung einer Schwungmatte an einem Trampolinrahmen mit den Schritten des
a) Bereitstellens einer Vielzahl von elastischen Elementen (10) und Verbinder,
b) Umschlingens eines Abschnitts des Trampolinrahmens mit einer aus dem mindestens einen elastischen Element (10) gebildeten Seilschlaufe,
c) Einhängens der freien Enden der elastischen Elemente (10) in einen der Verbinder,
d) Einhängens von einem Zugband (30) in den mit den freien Enden der elastischen Elemente (10) verbundenen Verbinder,
e) Wiederholens der Schritte b) bis d) für alle bereitgestellten elastische Elemente (10) entlang dem Umfang des Trampolinrahmens,
**dadurch gekennzeichnet, dass** der Schritt des Einhängens des Zugbandes (30) unterteilt ist in
d1) Durchführen von einer Schlaufe (31) des Zugbandes (30) durch eine zweite Aufnahme (201, 202; 211, 212; 251, 252; 1251) des Verbinders (200,1230) hindurch, wobei die zweite Aufnahme auf der zum Trampolinrahmen liegenden Seite eine grössere Öffnung (202) als gegenüber der nach innenweisenden Seite aufweist,
d2) Einsetzen eines Rückhalteelementes (371) in die durch die zweite Aufnahmen hindurchragende Schlaufe (31) des Zugbandes (30), und
d3) Zurückziehen der Schlaufe (31) mit dem in ihr eingesetzten Rückhalteelementes (371) bis zur Verriegelung der Position der Schlaufe (31) des Zugbandes (30) an dem Verbinder (200, 1230).

2. Verfahren nach Anspruch 1, wobei die Schritte c) und d) jeweils in umgekehrter Reihenfolge ausgeführt werden.

3. Verbindereinheit zur Befestigung einer Schwungmatte an einem Trampolinrahmen mit mindestens zwei ersten Aufnahmen (203, 213, 253, 263, 273, 293) für jeweils den Abschluss (100, 160) eines elastischen Elementes (10) und mit einer zweiten Aufnahme (201, 202; 211, 212; 251, 252; 1251, 400) für ein mit der Schwungmatte befestigtes Zugband (30) mit einer Zugschlaufe (31), **dadurch gekennzeichnet, dass** die zweite Aufnahme einen Durchgangsschlitz für die Durchführung der Zugschlaufe (31) mit einer auf der zum Trampolinrahmen liegenden Seite grösseren Öffnung (202) gegenüber der nach innen weisenden Seite aufweist, dass die Verbindereinheit über ein quer in die Zugschlaufe (31) einschiebbares Rückhalteelement verfügt, so dass die durch das Rückhalteelement offen gehaltene Zugschlaufe (31) beim Zurückziehen der Schlaufe (31) mit dem in ihr eingesetzten Rückhalteelementes (371) an dem Verbinder (200, 1230) verriegelt wird.

## Claims

1. A method for fixing a rebound mat to a trampoline frame comprising the steps of:
a) providing a plurality of elastic elements (10) and connectors,
b) looping a section of the trampoline frame with a rope loop formed from the at least one elastic element (10),
c) mounting the free ends of the elastic elements (10) in one of the connectors,
d) mounting a tension band (30) in the connector connected to the free ends of the elastic elements (10),
e) repeating steps b) to d) for all elastic elements (10) provided along the circumference of the trampoline frame,
**characterised in that** the step of mounting the tension band (30) is divided into
d1) passing a loop (31) of the tension band (30) through a second seat (201, 202; 211, 212; 251, 252; 1251) of the connector (200, 1230), the second seat having a larger opening (202) on the side facing the trampoline frame than opposite on the inwardly facing side,
d2) inserting a retaining element (371) into the loop (31) of the tension band (30) projecting through the second receptacle, and
d3) retracting the loop (31) with the retaining element (371) inserted therein until the position of the loop (31) of the tension band (30) is locked to the connector (200, 1230).

2. The method according to claim 1, wherein steps c) and d) are each carried out in reverse order.

3. A connector unit for fixing a rebound mat to a trampoline frame with at least two first receptacles (203, 213, 253, 263, 273, 293) each for the termination (100, 160) of an elastic element (10) and with a second receptacle (201, 202; 211, 212; 251, 252; 1251, 400) for a tension band (30) fastened to the rebound mat and having a pull loop (31), **characterized in that** the second receptacle has a through-slot for the passage of the pull loop (31) with an opening (202) which is larger on the side facing the trampoline frame than on the side facing inwards, **in that** the connector unit has a retaining element which can be inserted transversely into the pull loop (31), so that the pull loop (31), which is held open by the retaining element, is locked on the connector (200, 1230) when the pull loop (31) is pulled back with the retaining element (371) inserted therein.

## Revendications

1. Procédé de fixation d'un tapis de trampoline à un cadre de trampoline, comprenant les étapes :
a) fournir une pluralité d'éléments élastiques (10) et de connecteurs,
b) encercler une partie du cadre du trampoline avec une boucle de câble formée par le au moins un élément élastique (10),
c) accrocher des extrémités libres des éléments élastiques (10) à l'un des connecteurs,
d) accrocher une bande de traction (30) dans le connecteur relié aux extrémités libres des éléments élastiques (10),
e) répéter les étapes b) à d) pour tous les éléments élastiques (10) fournis le long de la circonférence du cadre de trampoline,
**caractérisé en ce que** l'étape d'accrocher la bande de traction (30) est divisée en
d1) passer une boucle (31) de la bande de traction (30) à travers un deuxième logement (201, 202 ; 211, 212 ; 251, 252 ; 1251) du connecteur (200, 1230), le deuxième logement présentant une ouverture (202) plus grande du côté orienté vers le cadre du trampoline que du côté orienté vers l'intérieur,
d2) insérer un élément de retenue (371) dans la boucle (31) de la bande de traction (30) qui traverse le deuxième logement, et
d3) retirer la boucle (31) avec l'élément de retenue (371) inséré dans celle-ci jusqu'au verrouillage de la position de la boucle (31) de la bande de traction (30) sur le connecteur (200, 1230).

2. Procédé selon la revendication 1, dans lequel les étapes c) et d) sont respectivement effectuées dans l'ordre inverse.

3. Unité de connexion pour la fixation d'un tapis de trampoline à un cadre de trampoline, comprenant au moins deux premiers logements (203, 213, 253, 263, 273, 293) pour respectivement la terminaison (100, 160) d'un élément élastique (10) et avec un deuxième logement (201, 202 ; 211, 212 ; 251, 252 ; 1251, 400) pour une bande de traction (30) fixée au tapis de trampoline et comportant une boucle de traction (31), **caractérisé en ce que** le deuxième logement présente une fente de passage pour le passage de la boucle de traction (31) avec une ouverture (202) plus grande sur le côté orienté vers le cadre de trampoline que sur le côté orienté vers l'intérieur, **en ce que** l'unité de connexion dispose d'un élément de retenue pouvant être inséré transversalement dans la boucle de traction (31), de sorte que la boucle de traction (31) maintenue ouverte par l'élément de retenue est verrouillée au connecteur (200, 1230) lorsque la boucle de traction (31) est retirée avec l'élément de retenue (371) inséré dans celle-ci.
